# EUROPEAN PATENT APPLICATION

(11) **EP 4 418 423 A1**
(43) Date of publication of application: **21.08.2024**
(21) Application number: 22931472.9
(22) Date of filing: 18.03.2022
(51) Int. Cl.: H01M 50/249

(54) **BATTERY CELL, MANUFACTURING METHOD AND MANUFACTURING DEVICE THEREFOR, BATTERY, AND ELECTRICAL DEVICE**

(71) Applicant: Contemporary Amperex Technology Co., Limited, Ningde City, Fujian 352100 (CN)
(72) Inventor: CHEN, Long, Ningde City, Fujian 352100 (CN); CHEN, Xinxiang, Ningde City, Fujian 352100 (CN); LIN, Denghua, Ningde City, Fujian 352100 (CN); HUANG, Shoujun, Ningde City, Fujian 352100 (CN); ZHENG, Yulian, Ningde City, Fujian 352100 (CN); WANG, Peng, Ningde City, Fujian 352100 (CN); JIN, Haizu, Ningde City, Fujian 352100 (CN)
(74) Representative: Thoma, Michael
(86) International application number: PCT/CN2022/081827
(87) International publication number: WO 2023/173441

(57) **Abstract**

Some embodiments of this application provide a battery cell, a battery cell manufacturing method and equipment, a battery, and an electrical device. The battery cell includes: a housing, where an opening is created at each of two ends of the housing in a first direction; an end cap, configured to cover the opening at either end of the housing; a first electrode assembly and a second electrode assembly, accommodated in the housing, where the first electrode assembly and the second electrode assembly are arranged along the first direction and insulated from each other; and an insulation structure, at least partially disposed between the first electrode assembly and the second electrode assembly, and configured to electrically isolate the first electrode assembly from the second electrode assembly. The foregoing technical solution achieves electrical isolation between adjacent electrode assemblies in a battery cell and enhances safety of the battery.

## Description

### TECHNICAL FIELD

This application relates to the field of battery technology, and in particular, to a battery cell, a battery cell manufacturing method and equipment, a battery, and an electrical device.

### BACKGROUND

Energy conservation and emission reduction are key to sustainable development of the automobile industry. Based on this situation, electric vehicles have become an important part of the sustainable development of the automobile industry by virtue of energy saving and environmental friendliness. Battery technology is crucial to development of electric vehicles.

In the development of battery technology, safety is not negligible in addition to improvement of electrical performance of batteries. If the safety of a battery is not guaranteed, the battery is not suitable for use. Therefore, how to enhance the safety of the battery is an urgent technical issue in the battery technology.

### SUMMARY

This application provides a battery cell, a battery cell manufacturing method and equipment, a battery, and an electrical device to enhance safety of the battery.

According to a first aspect, a battery cell is provided, including: a housing, where an opening is created at each of two ends of the housing in a first direction; an end cap, configured to cover the opening at either end of the housing; a first electrode assembly and a second electrode assembly, accommodated in the housing, where the first electrode assembly and the second electrode assembly are arranged along the first direction and insulated from each other; and an insulation structure, at least partially disposed between the first electrode assembly and the second electrode assembly, and configured to electrically isolate the first electrode assembly from the second electrode assembly.

Based on the technical solution in an embodiment of this application, the insulation structure, the first electrode assembly, and the second electrode assembly are accommodated in the housing. The insulation structure is at least partially disposed between the first electrode assembly and the second electrode assembly arranged along the first direction. In this way, the insulation structure plays a role of electrically isolating the first electrode assembly from the second electrode assembly, reduces the possibility of contact between the electrode plate of the first electrode assembly and the electrode plate of the second electrode assembly, prevents a short circuit caused by electrical connection between the components that need to be electrically isolated in the battery cell, reduces safety hazards, and enhances safety of the battery.

In some possible implementations, the insulation structure includes: a first part, disposed between the first electrode assembly and the second electrode assembly; a second part, wrapped around the first electrode assembly along a circumferential direction perpendicular to the first direction; and a third part, wrapped around the second electrode assembly along the circumferential direction perpendicular to the first direction, where at least one of the second part or the third part is formed together with a part or all of the first part in one piece.

The second part and the third part wrap around the first electrode assembly and the second electrode assembly respectively, and can separate the first electrode assembly from at least a part of the housing and separate the second electrode assembly from at least a part of the housing, thereby reducing the risk that the housing electrically connects the positive electrode plate and the negative electrode plate of the first electrode assembly and the risk that the housing electrically connects the positive electrode plate and the negative electrode plate of the second electrode assembly. In addition, at least one of the second part or the third part is formed together with a part or all of the first part in one piece, thereby simplifying the processing process of the insulation structure and reducing the number of components.

In some possible implementations, a through-hole running through a thickness of the first part is created in the first part. The through-hole is configured to circulate an electrolyte solution in the battery cell.

The through-hole created in the first part serves as an ion channel and an electrolyte infiltration channel in the battery cell. On the one hand, the through-hole facilitates circulation of the electrolyte solution and improves consistency of infiltration of the electrolyte solution for the first electrode assembly and the second electrode assembly. On the other hand, the through-hole reduces the weight of the electrolyte solution, and in turn, reduces the cost of the battery cell.

In some possible implementations, the insulation structure includes: a first insulation film, wrapped around the first electrode assembly, where an opening is created at an end of the first insulation film, the end being away from the second electrode assembly in the first direction, and the first insulation film includes a first wrapping end disposed opposite to the opening; a second insulation film, wrapped around the second electrode assembly, where an opening is created at an end of the second insulation film, the end being away from the first electrode assembly in the first direction, and the second insulation film includes a second wrapping end disposed opposite to the opening; and an insulator, disposed between the first wrapping end and the second wrapping end.

The first insulation film wraps around the first electrode assembly, thereby separating the first electrode assembly from at least a part of the housing, and in turn, reducing the risk that the housing electrically connects the positive electrode plate and the negative electrode plate of the first electrode assembly. The second insulation film wraps around the second electrode assembly, thereby separating the second electrode assembly from at least a part of the housing, and in turn, reducing the risk that the housing electrically connects the positive electrode plate and the negative electrode plate of the second electrode assembly.

The insulator is disposed between the first wrapping end and the second wrapping end, thereby avoiding the risk of electrical isolation failure caused by the rupture of the first insulation film or the second insulation film, and in turn, strengthening the electrical isolation between the first electrode assembly and the second electrode assembly.

In some possible implementations, the insulator is fixedly connected to the first wrapping end and/or the second wrapping end.

The insulator is fixedly connected to the first wrapping end and/or the second wrapping end, thereby improving the assembling efficiency, alleviating the wobble of the insulator when the battery cell is subj ected to an external impact, reducing the risk of failure of the insulator, and improving safety.

In some possible implementations, a through-hole running through a thickness of the insulator is created in the insulator, and the through-hole is configured to circulate an electrolyte solution in the battery cell.

The through-hole created in the insulator serves as an ion channel and an electrolyte infiltration channel in the battery cell. On the one hand, the through-hole facilitates circulation of the electrolyte solution and improves consistency of infiltration of the electrolyte solution for the first electrode assembly and the second electrode assembly. On the other hand, the through-hole reduces the weight of the electrolyte solution, and in turn, reduces the cost of the battery cell.

In some possible implementations, a first through-hole running through a thickness of the first wrapping end is created at the first wrapping end, and a second through-hole running through a thickness of the second wrapping end is created at the second wrapping end. The first through-hole and the second through-hole are configured to circulate the electrolyte solution in the battery cell. The first through-hole is staggered from the through-hole, and/or the second through-hole is staggered from the through-hole.

The through-hole created in the insulator may be staggered from at least one of the first through-hole or the second through-hole. This can avoid direct communication between the space accommodating the first electrode assembly and the space accommodating the second electrode assembly, and in turn, prevent metal chips or other conductive matters generated in the first insulation film from entering, through the through-hole, the space accommodating the second electrode assembly, and prevent metal chips or other conductive matters generated in the second insulation film from entering, through the through-hole, the space accommodating the first electrode assembly. This avoids electrical connection between the first electrode assembly and the second electrode assembly caused by the metal chips, and possible resultant short-circuit risks, strengthens the electrical isolation between the first electrode assembly and the second electrode assembly, and improves safety of the battery.

In some possible implementations, the insulation structure includes: a first insulation film, wrapped around the first electrode assembly, where an opening is created at each of two ends of the first insulation film in the first direction; a second insulation film, wrapped around the second electrode assembly, where an opening is created at each of two ends of the second insulation film in the first direction; and an insulator, disposed between the first electrode assembly and the second electrode assembly, and configured to cover an opening of the first insulation film and an opening of the second insulation film, where the opening of the first insulation film is close to the second electrode assembly, and the opening of the second insulation film is close to the first electrode assembly.

The first insulation film wraps around the first electrode assembly, thereby separating the first electrode assembly from at least a part of the housing, and in turn, reducing the risk that the housing electrically connects the positive electrode plate and the negative electrode plate of the first electrode assembly. The second insulation film wraps around the second electrode assembly, thereby separating the second electrode assembly from at least a part of the housing, and in turn, reducing the risk that the housing electrically connects the positive electrode plate and the negative electrode plate of the second electrode assembly. The insulator is disposed between the first electrode assembly and the second electrode assembly. When the battery cell is subjected to an external impact, the insulator can shelter the first electrode assembly and the second electrode assembly, reduce the possibility of contact between the electrode plate of the first electrode assembly and the electrode plate of the second electrode assembly, reduce short-circuit risks, and improve safety.

In some possible implementations, the insulator is made of an insulation material with a melting point greater than or equal to 200 °C.

The insulator made of a high-temperature-resistant insulation material is capable of withstanding high temperatures, and is generally of high strength and high hardness, and therefore, can avoid the risk of electrical isolation failure caused by the rupture of the first insulation film or the second insulation film, and in turn, strengthen the electrical isolation between the first electrode assembly and the second electrode assembly. In addition, the high-temperature resistance of the insulator enables the insulator to maintain original characteristics even at high temperatures, thereby improving the heat conduction inside the battery cell.

In some possible implementations, the insulation material includes at least one of polyethylene terephthalate, ethylene propylene diene monomer rubber, polytetrafluoroethylene, fusible polytetrafluoroethylene, fluororubber, silicone rubber, aluminum oxide, silicon nitride, or ceramics.

All such insulation materials are superior in heat resistance, and can maintain original characteristics even at high temperatures, thereby reducing the risk of failure of the insulator and improving safety.

In some possible implementations, the insulator is made of an elastic material. One side of the insulator is configured to abut the first electrode assembly, and another side of the insulator is configured to abut the second electrode assembly.

The insulator is made of an elastic material, and the two sides of the insulator abut the first electrode assembly and the second electrode assembly respectively. On the one hand, this arrangement enables the first electrode assembly and the second electrode assembly to be mounted stably during assembling. On the other hand, this arrangement reduces the relative movement between the first electrode assembly and the second electrode assembly during use of the battery, or reduces the amplitude of movement between the first electrode assembly and the second electrode assembly. This can reduce or avoid weld failure or connection component damage caused by a wobble of the first electrode assembly and/or the second electrode assembly, and avoid failure of electrical connection between the tab and the electrode terminal. Further, this improves the lifespan of the battery cell, and enhances safety of the battery.

In some possible implementations, the insulator includes: a first insulation strip and a second insulation strip disposed opposite to each other along the first direction; and an elastomer, disposed between the first insulation strip and the second insulation strip, where the elastomer is configured to cause the first insulation strip to abut the first electrode assembly and cause the second insulation strip to abut the second electrode assembly.

The elastomer is made of an elastic material, and abuts the first electrode assembly and the second electrode assembly through the first insulation strip and the second insulation strip. On the one hand, this arrangement enables the first electrode assembly and the second electrode assembly to be mounted stably during assembling. On the other hand, this arrangement reduces the relative movement between the first electrode assembly and the second electrode assembly during use of the battery, or reduces the amplitude of movement between the first electrode assembly and the second electrode assembly. This can reduce or avoid weld failure or connection component damage caused by a wobble of the first electrode assembly and/or the second electrode assembly, and avoid failure of electrical connection between the tab and the electrode terminal. Further, this improves the lifespan of the battery cell, and enhances safety of the battery.

In some possible embodiments, the first insulation strip and the second insulation strip are made of elastic materials.

The first insulation strip and the second insulation strip located on two sides of the elastomer are also made of elastic materials, thereby facilitating the entire insulator to absorb more deformation and exerting a cushioning effect on the one hand, and simplifying the processing process of the insulator on the other hand.

In some possible implementations, a first end face of the first electrode assembly is oriented toward the second electrode assembly, where the first electrode assembly includes a first electrode plate and a second electrode plate, the first electrode plate and the second electrode plate are wound around a winding axis, the winding axis is parallel to the first direction, and the first end face is perpendicular to the winding axis; or, the first electrode assembly includes a plurality of first electrode plates and a plurality of second electrode plates, the plurality of first electrode plates and the plurality of second electrode plates are stacked alternately along a second direction, the second direction is perpendicular to the first direction, and the first end face is perpendicular to the first direction; or, the first electrode assembly includes a first electrode plate and a plurality of second electrode plates, the first electrode plate includes a plurality of stacked sections and a plurality of bent sections, each bent section is configured to connect two adjacent stacked sections, the plurality of second electrode plates and the plurality of stacked sections are stacked alternately along a second direction, the second direction is perpendicular to the first direction, and the first end face is perpendicular to the first direction.

In a case that the first end face of the first electrode assembly is arranged in the above manner, when the electrolyte solution contacts the first end face, the electrolyte solution can quickly infiltrate all electrode plate layers of the first electrode assembly through the first end face, implement uniform infiltration for different layers of the first electrode assembly, and in turn, improve the infiltration efficiency for the first electrode assembly.

In some possible implementations, the first direction is a length direction of the housing.

The first electrode assembly and the second electrode assembly are arranged along the length direction of the housing, and the battery cell can be relatively large in dimension in the first direction, thereby reducing the number of battery cells in the battery, reducing the number of fixtures for fixing the battery cells, improving the space utilization rate, and increasing the energy density of the battery.

According to a second aspect, a battery is provided, including the battery cell according to the first aspect or any one possible implementation of the first aspect.

According to a third aspect, an electrical device is provided, including: the battery according to the second aspect, where the battery is configured to provide electrical energy for the electrical device.

According to a fourth aspect, a battery cell manufacturing method is provided. The method includes: providing a housing, where an opening is created at each of two ends of the housing in a first direction; providing an end cap; providing a first electrode assembly and a second electrode assembly; providing an insulation structure; letting the insulation structure, the first electrode assembly, and the second electrode assembly be accommodated in the housing, so that the insulation structure is at least partially disposed between the first electrode assembly and the second electrode assembly that are arranged along the first direction and insulated from each other to electrically isolate the first electrode assembly from the second electrode assembly; and using the end caps to cover the openings at two ends of the housing.

According to a fifth aspect, a piece of battery cell manufacturing equipment is provided. The equipment includes: a providing module, configured to: provide a housing, where an opening is created at each of two ends of the housing in a first direction, provide an end cap, provide a first electrode assembly and a second electrode assembly, and provide an insulation structure; and a mounting module, configured to: let the insulation structure, the first electrode assembly, and the second electrode assembly be accommodated in the housing, so that the insulation structure is at least partially disposed between the first electrode assembly and the second electrode assembly that are arranged along the first direction and insulated from each other to electrically isolate the first electrode assembly from the second electrode assembly, and use the end caps to cover the openings at two ends of the housing.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to an embodiment of this application;
FIG. 2 is a schematic exploded view of a battery according to an embodiment of this application;
FIG. 3 is a schematic structural diagram of a battery cell according to an embodiment of this application;
FIG. 4 is a schematic exploded view of a battery cell according to an embodiment of this application;
FIG. 5 is a schematic structural diagram of an insulation structure according to an embodiment of this application;
FIG. 6 to FIG. 9 are a schematic cross-sectional view of an insulation structure according to an embodiment of this application;
FIG. 10 is a schematic structural diagram of an insulation structure according to an embodiment of this application;
FIG. 11 to FIG. 13 are a three-dimensional schematic view and a schematic cross-sectional view of an insulation structure according to an embodiment of this application;
FIG. 14 is a schematic structural diagram of an insulation structure according to an embodiment of this application;
FIG. 15 is a schematic cross-sectional view of an insulation structure according to an embodiment of this application;
FIG. 16 is a schematic structural diagram of an insulator according to an embodiment of this application;
FIG. 17 is a schematic assembling drawing of the insulator shown in FIG. 16 and mounted in a battery cell;
FIG. 18 is a schematic structural diagram of an insulator according to an embodiment of this application;
FIG. 19 is a schematic assembling drawing of the insulator shown in FIG. 18 and mounted in a battery cell;
FIG. 20 to FIG. 22 are schematic cross-sectional views of a first electrode assembly according to an embodiment of this application;
FIG. 23 is a schematic flowchart of a battery cell manufacturing method according to an embodiment of this application; and
FIG. 24 is a schematic block diagram of battery cell manufacturing equipment according to an embodiment of this application.

The drawings are not drawn to scale.

### List of reference numerals:

1-vehicle; 10-battery; 11-box; 111-first box portion; 112-second box portion; 20-battery cell; 211-housing; 212-end cap; 212a-first cover plate; 212b-second cover plate; 214-electrode terminal; 214a-positive electrode terminal; 214b-negative electrode terminal; 221-first electrode assembly; 2211-first end face; 2212-second end face; 221a-first electrode plate; 221b-second electrode plate; 221c-separator; 221d-stacked section; 221e-bent section; 222-second electrode assembly; 2221-third end face; 2222-fourth end face; 22a-first tab; 22b-second tab; 23-insulation structure; 231-first part; 2311-through-hole; 231a-first subpart; 231b-second subpart; 232-second part; 233-third part; 234-first insulation film; 2341-first through-hole; 234a-first opening; 234b-first wrapping end; 235-second insulation film; 2351-second through-hole; 235a-second opening; 235b-second wrapping end; 236-insulator; 236a-first insulation strip; 236b-second insulation strip; 236c-elastomer; 2361-through-hole; 237-third insulation film; 30-controller; 40-motor.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number (including two); the terms such as "up", "down", "left", "right", "in", and "out" indicating a direction or a position relationship are merely intended for ease or brevity of description of this application, but do not indicate or imply that the mentioned apparatus or component is necessarily located in the specified direction or constructed or operated in the specified direction. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be an undetachable connection, a detachable connection, or an integrated connection, and may be a direct connection or an indirect connection implemented through an intermediary. A person of ordinary skill in the art can understand the specific meanings of the terms in this application according to specific situations.

In this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In this application, a battery means a physical module that includes one or more battery cells to provide electrical energy. For example, the battery mentioned in this application may include a battery module, a battery pack, or the like. A battery typically includes a box configured to package one or more battery cells. The box prevents liquid or other foreign matters from affecting the charging or discharging of the battery cells.

In some embodiments, a battery cell may include types such as a lithium-ion secondary battery, a lithium-ion primary battery, a lithium-sulfur battery, a sodium-lithium-ion battery, a sodium-ion battery, or a magnesium-ion battery. The type of the battery cell is not limited herein. In some embodiments, a battery cell is briefly referred to as a cell.

A battery cell includes an electrode assembly and an electrolytic solution. The electrode assembly includes a positive electrode plate, a negative electrode plate, and a separator. The battery cell works primarily by relying on shuttling of metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. In order to ensure passage of a large current without fusing off, the number of positive tabs is plural, and the plurality of positive tabs are stacked together; and the number of negative tabs is plural, and the plurality of negative tabs are stacked together. The separator may be made of a material such as polypropylene (polypropylene, PP) or polyethylene (polyethylene, PE). In addition, the electrode assembly may be of a jelly-roll type structure or a stacked type structure, without being limited herein.

A box of a battery in an embodiment of this application is configured to accommodate a plurality of battery cells, a busbar component, and other components of the battery. In some embodiments, a structure configured to fix the battery cell may be further disposed in the box. The shape of the box may depend on the shape of the plurality of battery cells to be accommodated in the box. In some embodiments, the box may be in a quadrangular shape with six walls.

The busbar component referred to herein is configured to implement electrical connection between the plurality of battery cells, such as parallel connection, series connection, or series-parallel connection. The busbar component may implement electrical connection between the battery cells by connecting electrode terminals of the battery cells. In some embodiments, the busbar component may be fixed to the electrode terminals of the battery cell by welding. The busbar component transmits the voltage of the battery cell. A plurality of battery cells are connected in series to obtain a higher voltage. Correspondingly, an electrical connection formed by the busbar component may be referred to as a "high-voltage connection".

In some battery packaging technologies, a plurality of battery cells (cell) may be integrated to form a battery module (module) first, and then the battery module is mounted in a battery box to form a battery pack (pack). In some other battery packaging technologies, a plurality of battery cells are directly mounted in the battery box to form a battery pack. This battery packaging technology is also known as a cell-to-pack (cell to pack, CTP) packaging technology. In the CTP packaging technology, the battery module, which is an intermediate mode of the battery, is omitted. Therefore, the mass of the battery pack is reduced, and the energy density of the battery is increased. In other words, in a process of packaging the battery, a plurality of battery cells may directly form a battery, or, a plurality of battery cells form a battery module first and then one or more battery modules form a battery. The battery is further mounted in the electrical device to provide electrical energy for the electrical device.

The development of the battery technology needs to allow for a plurality of design factors, including performance parameters such as energy density, cycle life, discharge capacity, charge rate, and discharge rate, and also needs to ensure safety of the battery.

Generally, a battery includes a box and a plurality of battery cells accommodated in the box. Generally, a fixture configured to support and fix the battery cells is generally disposed in the box. For a battery, on the premise of a constant battery capacity, a smaller size of the battery cell means a larger number of battery cells, and requires more fixtures for fixing the battery cells in the box, thereby leading to a lower space utilization rate inside the battery, and making the energy density of the battery unable to meet requirements.

To simplify the structure of the battery and increase the energy density of the battery, the size of a single battery cell may be increased to reduce the number of battery cells in the battery, simplify the fixtures in the box, and improve the space utilization rate inside the battery.

To adapt to the size of the battery cell, a plurality of electrode assemblies may be sequentially arranged in a shell of the battery cell, and the plurality of electrode assemblies may be connected in series or parallel as a whole. However, when a plurality of electrode assemblies are connected in series and parallel, the current needs to be led out through the same electrode terminal. The current generated by an electrode assembly distant from the electrode terminal needs to pass through an electrode assembly near the electrode terminal before the current can be transmitted to the electrode terminal. Consequently, for the electrode assembly distant from the electrode terminal, the conductive path is overly long, and the internal resistance is overly high, thereby leading to low power of the battery cell. The electrode assembly near the electrode terminal not only needs to conduct the current generated by itself, but also needs to conduct the current generated by the electrode assembly distant from the electrode terminal, thereby causing the electrode assembly near the electrode terminal to generate more heat, and in turn, impairing the charge and discharge performance.

To solve this problem, the electrode assemblies in the battery cell may be caused to be electrically isolated from each other, so that the electrode assemblies do not need to transmit the current of each other. In some technical solutions, the adjacent electrode assemblies are spaced out. However, the inventor hereof finds that, although electrical isolation can be achieved by means of spacing out the electrode assemblies, the two electrode assemblies may still be in contact when the battery cell is impacted by an external force. Because the electrode assemblies include metal materials, the contact between the two electrode assemblies makes the two electrode assemblies electrically connected, thereby making the battery cell prone to a short circuit. The short circuit may result in thermal runaway that gives rise to a surge in pressure or temperature inside the battery cell, and even cause safety problems such as explosion and fire of the battery cell, thereby posing safety hazards.

In view of the problem above, this application provides a technical solution, in which the adjacent electrode assemblies in the battery cell are electrically isolated from each other by using an insulation structure, so as to enhance safety of the battery. More specifically, the insulation structure, the first electrode assembly, and the second electrode assembly are accommodated in the housing, so that the insulation structure is at least partially disposed between the first electrode assembly and the second electrode assembly that are arranged along the first direction and insulated from each other to electrically isolate the first electrode assembly from the second electrode assembly. In this way, the electrical isolation between the adjacent electrode assemblies in the battery cell can be achieved to prevent a short circuit caused by electrical connection between the components that need to be electrically isolated in the battery cell, reduce safety hazards, and enhance safety of the battery.

All technical solutions described in the embodiments of this application are applicable to various battery-powered devices such as a mobile phone, a portable device, a laptop computer, an electric power cart, an electrical toy, an electric tool, an electric vehicle, a ship, and a spacecraft. The spacecraft includes an airplane, a rocket, a space shuttle, a spaceship, and the like.

Understandably, the technical solutions described in the embodiments of this application are not only applicable to the devices described above, but also applicable to all battery-powered devices. However, for brevity, the following embodiments are described by using an electric vehicle as an example.

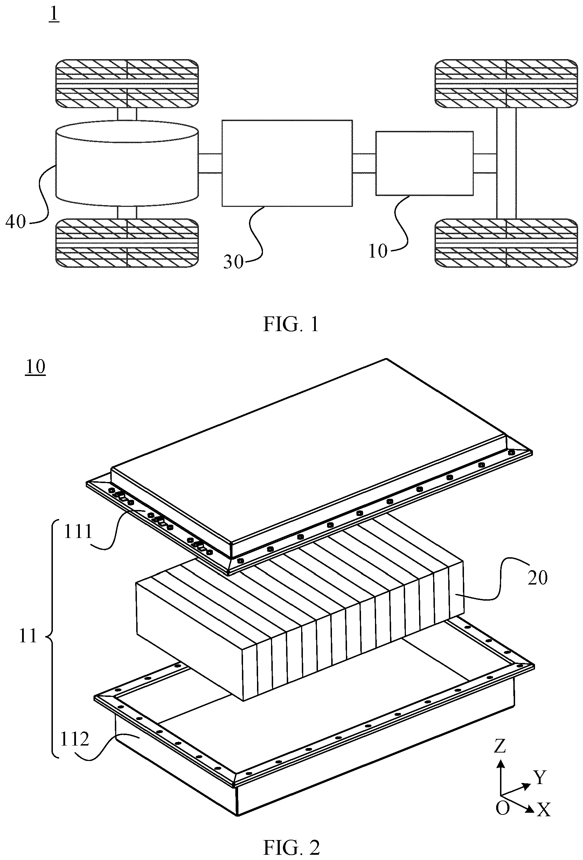

For example, FIG. 1 is a schematic structural diagram of a vehicle 1 according to an embodiment of this application. The vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power requirements, the battery 10 may include a plurality of battery cells. The plurality of battery cells may be connected in series, parallel, or series-and-parallel pattern. The series-and-parallel pattern means a combination of series connection and parallel connection. The battery 10 is also referred to as a battery pack. In some embodiments, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery 10, or form the battery modules that are then used to form the battery 10.

For example, FIG. 2 is a schematic structural diagram of a battery 10 according to an embodiment of this application. The battery 10 may include a plurality of battery cells 20. The battery 10 may further include a box (also referred to as an enclosure) 11. The box 11 is hollow inside. A plurality of battery cells 20 are accommodated in the box 11. As an example, referring to FIG. 2, the box 11 may include two parts, herein referred to as a first box portion 111 and a second box portion 112 respectively. The first box portion 111 and the second box portion 112 are snap-fitted together to form an accommodation space that accommodates a plurality of battery cells 20. The shapes of the first box portion 111 and the second box portion 112 may depend on the shape of a plurality of battery cells 20 combined. An opening may be created on both the first box portion 111 and the second box portion 112. For example, the first box portion 111 and the second box portion 112 each may be a hollow cuboid, and each may include a single opening surface. The opening of the first box portion 111 is opposite to the opening of the second box portion 112. The first box portion 111 and the second box portion 112 are snap-fitted together to form a box 11 that includes a closed cavity. The plurality of battery cells 20 are connected in parallel, series, or series-and-parallel pattern and combined together, and then placed into the box 11 that is formed by snap-fitting the first box portion 111 and the second box portion 112.

In an embodiment of this application, a plurality of battery cells 20 may be mounted in the box 11 in various ways, which will be described below with examples.

In a possible implementation, a plurality of battery cells (cell) 20 may be integrated to form at least one battery module (module) first, and then the at least one battery module is mounted in the box 11 to form a battery pack (pack). In this implementation, auxiliary structural members such as a crossbeam may be further disposed between the battery modules to improve the mounting stability of the battery module in the box 11.

In another possible implementation, a plurality of battery cells 20 may be directly connected to each other, and mounted in the box 11 to form a battery pack. With the battery module as an intermediate mode being omitted, no auxiliary structural members such as a crossbeam need to be disposed in the box 11, thereby reducing the weight of the battery 10 and increasing the energy density of the battery 10. In the related art, this implementation is also referred to as a cell-to-pack (cell to pack, CTP) mounting technology.

In still another possible implementation, the box 11 may be integrated in an electrical device containing the battery 10. In other words, the box 11 is integrally formed together with the structural member in the electrical device. The plurality of battery cells 20 connected to each other may be directly mounted in the box 11 in the electrical device. As an example, the box 11 may be integrally disposed in a local region of a chassis of the vehicle 1. The plurality of battery cells 20 connected to each other may be directly mounted on the chassis of the vehicle 1. In the related art, this implementation is also referred to as a cell-to-chassis (cell to chassis, CTC) mounting technology.

In some other embodiments, the battery 10 may further include other structures, details of which are omitted here. For example, the battery 10 may further include a busbar component. The busbar component is configured to implement electrical connection between the plurality of battery cells 20, such as parallel connection, series connection, or series-parallel connection. Specifically, the busbar component may implement the electrical connection between the battery cells 20 by connecting electrode terminals of the battery cells 20. In some embodiments, the busbar component may be fixed to the electrode terminals of the battery cell 20 by welding. Electrical energy of the plurality of battery cells 20 may be led out by a conductive mechanism running through the box 11. In some embodiments, the conductive mechanism may belong to the busbar component.

Depending on different power requirements, the number of battery cells 20 may be set to any value. A plurality of battery cells 20 may be connected in series, parallel, or series-and-parallel pattern to achieve a relatively high capacity or power.

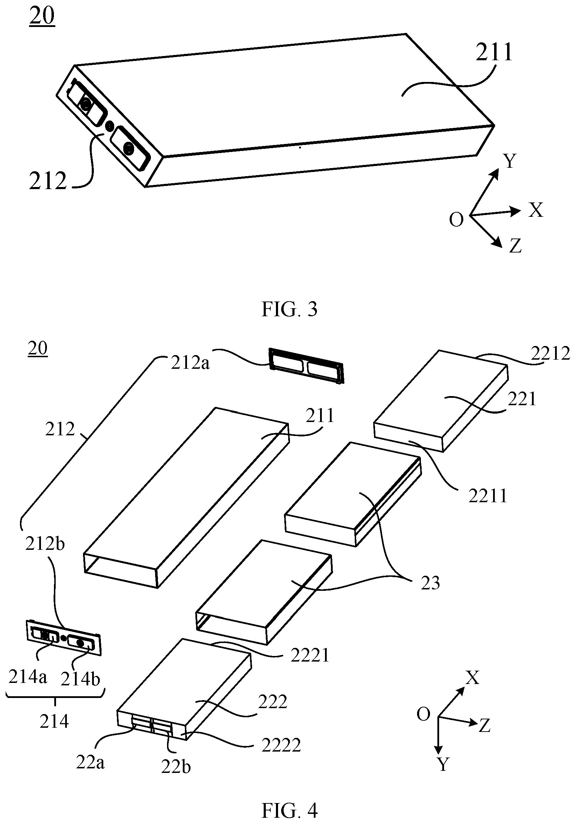

FIG. 3 is a schematic structural diagram of a battery cell 20 according to an embodiment of this application. FIG. 4 is a possible schematic exploded view of a battery cell 20 according to an embodiment of this application. For example, the battery cell 20 shown in FIG. 4 may be a schematic exploded view of the battery cell 20 shown in FIG. 3.

Referring to FIG. 3 to FIG. 4, the battery cell 20 in an embodiment of this application includes a housing 211, an end cap 212, a first electrode assembly 221, a second electrode assembly 222, and an insulation structure 23. An opening is created at each of two ends of the housing 211 in a first direction. The end cap 212 is configured to cover the opening at either end of the housing 211. The first electrode assembly 221 and the second electrode assembly 222 are accommodated in the housing 211. The first electrode assembly 221 and the second electrode assembly 222 are arranged along the first direction and insulated from each other. The insulation structure 23 is at least partially disposed between the first electrode assembly 221 and the second electrode assembly 222, and is configured to electrically isolate the first electrode assembly 221 from the second electrode assembly 222.

In an embodiment of this application, the end cap 212 and the housing 211 may form a shell of the battery cell 20. The shell defines an accommodation cavity to accommodate the first electrode assembly 221 and the second electrode assembly 222. In some embodiments, the shell may assume a polyhedral structure. The walls of the housing 211 and the end cap 212 are all referred to as walls of the battery cell 20.

In an embodiment of this application, the shape of the housing 211 may adapt to the shape of a combination of the electrode assemblies disposed in the housing 211. As an example rather than limitation, the housing 211 may assume a hollow cuboid with both ends opened or a hollow cylinder with both ends opened. The openings of the housing 211 make it convenient to put the first electrode assembly 221 and the second electrode assembly 222 into the housing 211. In some embodiments, the openings of the housing 211 may be located at two ends of the housing 211 in the length direction. Therefore, the first direction in this application may be a length direction of the housing 211, for example, the direction X shown in FIG. 3. In some embodiments, the length direction of the housing 211 may be understood as the length direction of the battery cell 20.

In an embodiment of this application, the first electrode assembly 221 and the second electrode assembly 222 are arranged along the first direction X. For example, as shown in FIG. 4, the first electrode assembly 221 includes a first end face 2211 and a second end face 2212 disposed opposite to each other in the first direction. The second electrode assembly 222 includes a third end face 2221 and a fourth end face 2222 disposed opposite to each other in the first direction. The first end face 2211 of the first electrode assembly 221 is oriented toward the third end face 2221 of the second electrode assembly 222. The second end face 2212 of the first electrode assembly 221 is oriented toward a cover plate near the first electrode assembly 221. The fourth end face 2222 of the second electrode assembly 222 is oriented toward a cover plate near the second electrode assembly 222.

In an embodiment of this application, the end caps 212 can cover the openings at the two ends of the housing 211 to form a closed cavity for accommodating the first electrode assembly 221 and the second electrode assembly 222 that are arranged along the first direction. The cavity may be filled with an electrolyte solution for conducting ions.

In some embodiments, the end cap 212 may include a first cover plate 212a and a second cover plate 212b. The first cover plate 212a and the second cover plate 212b cover the openings at the two ends of the housing 211 respectively, and are connected to the housing 211 to form the closed cavity. By disposing two openings and two cover plates, it is convenient to put the first electrode assembly 221 and the second electrode assembly 222 into the housing, and the assembling process of the battery cells is simplified.

In a possible implementation, the first cover plate 212a and the second cover plate 212b may be formed independently and then connected to the housing 211 to cover the openings separately.

Both the first electrode assembly 221 and the second electrode assembly 222 may be referred to as electrode assemblies. In the battery cell 20, each electrode assembly includes a first tab 22a and a second tab 22b. The first tab 22a and the second tab 22b are of opposite polarities. For example, when the first tab 22a is a positive tab, the second tab 22b is a negative tab.

The battery cell 20 in this embodiment of this application may further include electrode terminals 214. The electrode terminals 214 are configured to be electrically connected to the electrode assembly to output electrical energy of the battery cell 20. In some embodiments, the electrode terminals may be disposed based on the location of the tabs of the electrode assembly. For example, as shown in FIG. 4, corresponding to the tabs of the electrode assembly, at least one pair of electrode terminals 214 may be included in the battery cell 20. Each pair of electrode terminals 214 includes a positive electrode terminal 214a and a negative electrode terminal 214b. The positive electrode terminal 214a is electrically connected to the positive tab 22a, and the negative electrode terminal 214b is electrically connected to the negative tab 22b. The positive electrode terminal 214a may be directly or indirectly connected to the positive tab 22a. The negative electrode terminal 214b may be directly or indirectly connected to the negative tab 22b. For example, the positive electrode terminal 214a may be electrically connected to the positive tab 22a by one connection component, and the negative electrode terminal 214b may be electrically connected to the negative tab 22b by another connection component.

Corresponding to the arrangement of the tabs of the electrode assembly, the same pair of electrode terminals may be disposed on the same wall or different walls of the battery cell 20, and different pairs of electrode terminals may also be disposed on the same wall or different walls of the battery cell 20.

For ease of description, this application is described by using an example in which a tab of the first electrode assembly 221 and a tab of the second electrode assembly 222 are oriented toward different walls of the battery cell 20. Correspondingly, the battery cell 20 includes several pairs of electrode terminals. For example, as shown in FIG. 4, a pair of electrode terminals 214 is disposed on the first cover plate 212a and the second cover plate 212b separately. A first tab 22a and a second tab 22b of the first electrode assembly 221 are oriented toward the first cover plate 212a. A first tab 22a and a second tab 22b of the second electrode assembly 222 are oriented toward the second cover plate 212b. The positive electrode terminal 214a disposed on the first cover plate 212a is electrically connected to the positive tab of the first electrode assembly 221, and the negative electrode terminal 214b disposed on the first cover plate 212a is electrically connected to the negative tab of the first electrode assembly 221. Similarly, the positive electrode terminal 214a disposed on the second cover plate 212b is electrically connected to the positive tab of the second electrode assembly 222, and the negative electrode terminal 214b disposed on the second cover plate 212b is electrically connected to the negative tab of the second electrode assembly 222.

In other words, for the first electrode assembly 221 and the second electrode assembly 222, among the two electrode assemblies, the tabs of the same electrode assembly are disposed on the same end face, but a tab of one electrode assembly and a tab of the other electrode assembly are oriented in opposite directions and both oriented outward from the battery cell 20. For example, as shown in FIG. 4, the two tabs of the first electrode assembly 221 may be disposed on the second end face 2212. The two tabs of the second electrode assembly 222 may be disposed on the fourth end face 2222. Correspondingly, the battery cell 20 includes two pairs of electrode terminals, and the two groups of electrode terminals are located on different walls of the battery cell 20, but the embodiments of this application are not limited to the examples.

In an embodiment of this application, the first electrode assembly 221 and the second electrode assembly 222 each are connected to a pair of electrode terminals. To avoid a short circuit between the electrode plate of the first electrode assembly 221 and the electrode plate of the second electrode assembly 222, electrical insulation may be implemented between the first electrode assembly 221 and the second electrode assembly 222, so that the first electrode assembly 221 is electrically isolated from the second electrode assembly 222.

The insulation between the first electrode assembly 221 and the second electrode assembly 222 means that no electrical connection exists between the first electrode assembly 221 and the second electrode assembly 222.

In an embodiment of this application, the electrical isolation between the first electrode assembly 221 and the second electrode assembly 222 is implemented by an insulation structure 23, details of which are omitted here and will be described emphatically in the following embodiments with reference to drawings.

In some embodiments, a pressure relief mechanism may be disposed on one wall of the battery cell 20. The pressure relief mechanism is configured to be actuated when an internal pressure or temperature of the battery cell 20 reaches a threshold, so as to relieve the internal pressure or temperature. The pressure relief mechanism and the electrode terminals 214 may be disposed on the same wall of the battery cell 20, or may be disposed on different walls of the battery cell 20, which does not constitute any limitation on this application. For example, a pair of electrode terminals 214 is disposed on the first cover plate 212a, and another pair of electrode terminals 214 is disposed on the second cover plate 212b. The pressure relief mechanism may be disposed on the first cover plate 212a or the second cover plate 212b, or on the housing 211.

The pressure relief mechanism may be a part of the wall on which the pressure relief mechanism is located. For example, the pressure relief mechanism is formed by creating a nick on the wall on which the pressure relief mechanism is located; or, the pressure relief mechanism may be a discrete structure independent of the wall on which the pressure relief mechanism is located, and may be fixed onto the wall by means such as welding. In addition, the pressure relief mechanism may be any one of various possible pressure relief mechanisms such as a temperature-sensitive pressure relief mechanism or a pressure-sensitive pressure relief mechanism. The type of the pressure relief mechanism is not limited herein.

In the battery cell 20 according to an embodiment of this application, the insulation structure 23, the first electrode assembly 221, and the second electrode assembly 222 are accommodated in the housing 211. The insulation structure 23 is at least partially disposed between the first electrode assembly 221 and the second electrode assembly 222 arranged along the first direction and insulated from each other. In this way, the insulation structure 23 plays a role of electrically isolating the first electrode assembly 221 from the second electrode assembly 222, reduces the possibility of contact between the electrode plate of the first electrode assembly 221 and the electrode plate of the second electrode assembly 222, prevents a short circuit caused by electrical connection between the components that need to be electrically isolated in the battery cell 20, reduces safety hazards, and enhances safety of the battery.

In addition, the first electrode assembly 221 and the second electrode assembly 222 are arranged along the first direction in the housing 211, thereby increasing the dimension of the battery cell 20 along the first direction, and in turn, increasing the space utilization rate of the battery cell 20 in the battery, and increasing the energy density. The first direction is the length direction of the battery cell 20. Therefore, the first cover plate 212a and the second cover plate 212b are perpendicular to the first direction separately. The first cover plate 212a and the second cover plate 212b are the smallest-area walls of the battery cell 20. In this way, the surfaces prone to thermally expand of the first electrode assembly 221 and the second electrode assembly 222 correspond to the largest-area walls of the battery cell 20. In other words, the expansion direction at a position most prone to thermally expand on the electrode assembly in the battery cell is perpendicular to the largest-area wall of the battery cell 20, thereby facilitating heat dissipation of the battery cell 20 and reducing expansion.

The first electrode assembly 221 is electrically isolated from the second electrode assembly 222 through at least a part of the insulation structure 23. Therefore, the first electrode assembly 221 and the second electrode assembly 222 do not need to transmit the current of each other. This shortens the conductive path of the first electrode assembly 221 and the conductive path of the second electrode assembly 222, reduces the internal resistance, reduces heat production, increases the power of the battery cell, and improves the charge and discharge performance of the battery cell.

In an embodiment of this application, in order to electrically isolate the first electrode assembly 221 from the second electrode assembly 222, the insulation structure 23 may be disposed in various ways, which will be described in detail below with reference to drawings.

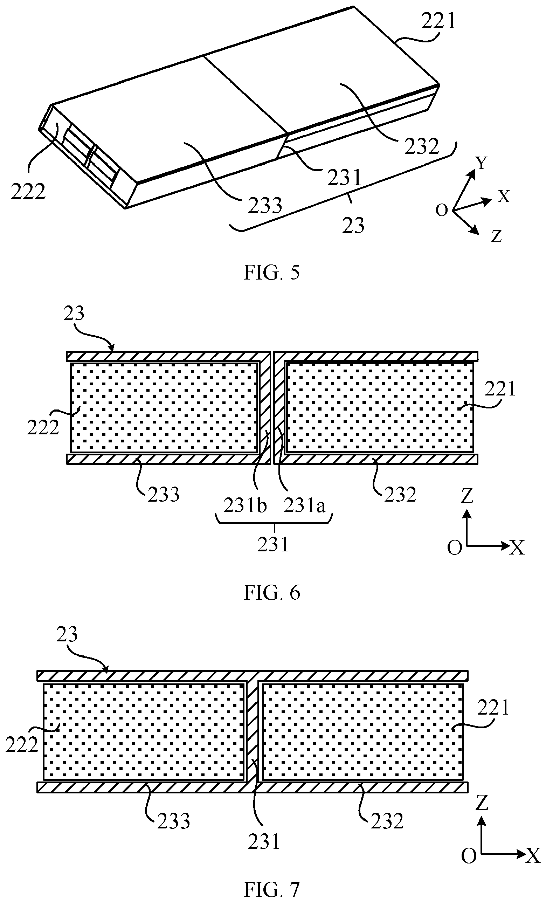

FIG. 5 is a schematic structural diagram of an insulation structure according to an embodiment of this application.

As shown in FIG. 5, the insulation structure 23 includes a first part 231, a second part 232, and a third part 233. The first part 231 is disposed between the first electrode assembly 221 and the second electrode assembly 222. The second part 232 is wrapped around the first electrode assembly 221 along a circumferential direction perpendicular to the first direction. The third part 233 is wrapped around the second electrode assembly 222 along the circumferential direction perpendicular to the first direction. At least one of the second part 232 or the third part 233 is formed together with a part or all of the first part 231 in one piece.

As an example rather than limitation, the second part 232 wraps the faces of the first electrode assembly 221 other than the faces arranged in the first direction. The wrapping direction of the second part 232 is the circumferential direction perpendicular to the first direction. The third part 233 wraps the faces of the second electrode assembly 222 other than the faces arranged in the first direction. The wrapping direction of the third part 233 is the circumferential direction perpendicular to the first direction.

In some embodiments, the second part 232 does not wrap an end of the first electrode assembly 221, the end being away from the second electrode assembly 222 in the first direction. This end is configured to electrically connect the tab and the electrode terminal of the first electrode assembly 221. The third part 233 does not wrap an end of the second electrode assembly 222, the end being away from the first electrode assembly 221 in the first direction. This end is configured to electrically connect the tab and the electrode terminal of the second electrode assembly 222.

In an embodiment of this application, the first part 231 may include a plurality of parts that are separated from each other, or may be a whole, as exemplified below.

As an example, FIG. 6 is a schematic cross-sectional view of an insulation structure 23. As shown in FIG. 6, the first part 231 is disposed between the first electrode assembly 221 and the second electrode assembly 222. The first part 231 may include a first subpart 231a and a second subpart 231b separated from each other. The first subpart 231a and the second subpart 231b are disposed opposite to each other along the first direction.

In this example, the second part 232 and the third part 233 each are formed together with a part of the first part 231 in one piece. More specifically, the second part 232 and the first subpart 231a are formed in one piece, and the third part 233 and the second subpart 231b are formed in one piece. Because the first subpart 231a is separable from the second subpart 231b, the one-piece combination of the second part 232 and the first subpart 231a is separable from the one-piece combination of the third part 233 and the second subpart 231b.

In some embodiments, it is deemed that the second part 232 and the first subpart 231a form a cylindrical structure opened at one end, and the first electrode assembly 221 is disposed in the accommodation space formed by the cylindrical structure. It is deemed that the third part 233 and the second subpart 231b form another cylindrical structure opened at one end. The second electrode assembly 222 is disposed in the accommodation space formed by the other cylindrical structure.

In this embodiment, a part of the insulation structure 23, which wraps the first electrode assembly 221, is separable from a part of the insulation structure 23, which wraps the second electrode assembly 222. Therefore, in a mounting process, the first electrode assembly 221 and the second electrode 222 may be disposed in the two relatively independent cylindrical structures respectively, and then assembled, where the two cylindrical structures are formed by the insulation structure 23. This makes the assembling process more flexible.

In some embodiments, the cylindrical structure formed by the second part 232 and the first subpart 231a may be a first insulation film. The first insulation film is wrapped around the first electrode assembly 221. An opening is created at an end of the first insulation film, the end being away from the second electrode assembly 222 in the first direction. Similarly, the cylindrical structure formed by the third part 233 and the second subpart 231b may be a second insulation film. The second insulation film is wrapped around the second electrode assembly 222. An opening is created at an end of the second insulation film, the end being away from the first electrode assembly 221 in the first direction.

As another example, FIG. 7 is a schematic cross-sectional view of an insulation structure 23. As shown in FIG. 7, the first part 231 is disposed between the first electrode assembly 221 and the second electrode assembly 222. The second part 232 and the third part 233 each are formed together with the first part 231 in one piece. In other words, the first part 231, the second part 232, and the third part 233 included in the insulation structure 23 are formed in one piece.

In some embodiments, it is deemed that the second part 232 and the first part 231 form a cylindrical structure opened at one end, and the third part 233 and the first part 231 form another cylindrical structure opened at one end. The two cylindrical structures share the same bottom wall, and the two cylindrical structures are opened toward opposite directions. The first electrode assembly 221 and the second electrode assembly 222 are disposed in the accommodation spaces formed by the two cylindrical structures respectively.

In this embodiment, a part of the insulation structure 23, which wraps the first electrode assembly 221, and a part of the insulation structure 23, which wraps the second electrode assembly 222, are formed in one piece, thereby simplifying the processing process of the insulation structure 23, and reducing the number of components. In addition, such arrangement saves an operation of alignment between the first electrode assembly 221 and the second electrode assembly 222, thereby improving the assembling efficiency, and in turn, improving the production efficiency of the battery.

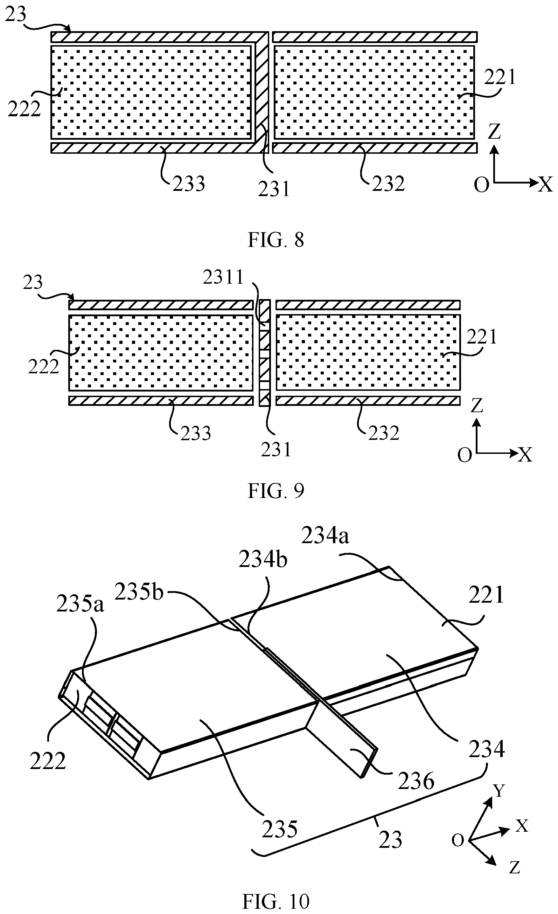

As another example, FIG. 8 is another schematic cross-sectional view of an insulation structure 23. As shown in FIG. 8, the first part 231 is disposed between the first electrode assembly 221 and the second electrode assembly 222. The third part 233 and the first part 231 are formed in one piece.

In some embodiments, it is deemed that the third part 233 and the first part 231 form a cylindrical structure opened at one end, and the opening end of the cylindrical structure is an end of the third part 233, the end being away from the first electrode assembly 221 in the first direction. The second part 232 forms a cylindrical structure opened at both ends.

In this embodiment, the first part 231 is a bottom wall of the cylindrical structure opened at one end, and can also be used as a bottom wall to cover an opening of the cylindrical structure opened at both ends, the opening being close to the second electrode assembly 222 in the first direction. This also implements electrical isolation between the first electrode assembly 221 and the second electrode assembly 222.

In some other embodiments, the first part 231 and the second part 232 may be formed in one piece to form a cylindrical structure opened at one end, and the third part 233 forms another cylindrical structure opened at both ends. In this case, the first part 231 is a bottom wall of the cylindrical structure formed by the second part 232 and the first part 231, and can also be used as a bottom wall to cover an opening of the cylindrical structure opened at both ends and formed by the third part 233, the opening being close to the first electrode assembly 221 in the first direction.

In the above example, the first part 231 and the second part 232 and/or the third part 233 are formed in one piece. In other embodiments, as shown in FIG. 9, the first part 231 may be a separate part instead. That is, the first part 231, the second part 232, and the third part 233 may be separated from each other. Specifically, the second part 232 and the third part 233 each form a cylindrical structure opened at both ends, and the first part 231 may serve as a common bottom wall of the two cylindrical structures.

In some embodiments, in the examples shown in FIG. 6 to FIG. 9, the first part 231, the second part 232, and the third part 233 included in the insulation structure 23 may be made of the same material, for example, a polyester insulation material such as polyimide, polyethylene, polyvinylidene difluoride, or polytetrafluoroethylene. In some embodiments, the insulation structure 23 may be a Mylar film.

In some embodiments, as shown in FIG. 9, a through-hole 2311 running through the thickness of the first part 231 is created in the first part 231. The through-hole 2311 is configured to circulate an electrolyte solution in the battery cell.

In an embodiment of this application, the through-hole 2311 may extend along the first direction, or extend along a straight line that is coplanar with the first direction and that is at an acute angle to the first direction, or extend along a curve coplanar with the first direction, as long as the through-hole 2311 runs through the first part from an end of the first part 231 near the first electrode assembly 221 to an end of the first part 231 near the second electrode assembly 222, which is not particularly limited herein.

The first part 231 can electrically isolate the first electrode assembly 221 from the second electrode assembly 222, and the through-hole 2311 created in the first part 231 can be used as an ion channel and an electrolyte infiltration channel in the battery cell, thereby facilitating circulation of the electrolyte solution in the battery cell between the space containing the first electrode assembly 221 and the space containing the second electrode assembly 222. On the one hand, the above arrangement facilitates circulation of the electrolyte solution, and improves the consistency of infiltration of the electrolyte solution in the first electrode assembly 221 and the second electrode assembly 222. On the other hand, the above arrangement reduces the weight of the electrolyte solution, and in turn, reduces the cost of the battery cell.

Understandably, in the examples shown in FIG. 6 to FIG. 8, the first part 231 may include a through-hole 2311 shown in FIG. 9 to facilitate circulation of the electrolyte solution, details of which are omitted here for brevity.

FIG. 10 is a schematic structural diagram of another insulation structure according to an embodiment of this application. As shown in FIG. 10, the insulation structure 23 includes a first insulation film 234, a second insulation film 235, and an insulator 236.

The first insulation film 234 is wrapped around the first electrode assembly 221. The first insulation film 234 includes an opening 234a at an end away from the second electrode assembly 222 in the first direction. The first insulation film 234 includes a first wrapping end 234b disposed opposite to the opening 234a. For ease of description and distinction, in the following embodiments of this application, the opening 234a of the first insulation film 234 is referred to as a first opening.

The second insulation film 235 is wrapped around the second electrode assembly 222. The second insulation film 235 includes an opening 235a at an end away from the first electrode assembly 221 in the first direction. The second insulation film 235 includes a second wrapping end 235b disposed opposite to the opening 235a. For ease of description and distinction, in the following embodiments of this application, the opening 235a of the second insulation film 235 is referred to as a second opening.

The insulator 236 is disposed between the first wrapping end 234b and the second wrapping end 235b.

In other words, the first electrode assembly 221 is wrapped in the first insulation film 234, but the first insulation film 234 does not cover an end of the first electrode assembly 221, the end being away from the second electrode assembly 222 in the first direction. The second electrode assembly 222 is wrapped in the second insulation film 235, but the second insulation film 235 does not cover an end of the second electrode assembly 222, the end being away from the first electrode assembly 221 in the first direction. The first wrapping end 234b, the insulator 236, and the second wrapping end 235b are arranged in sequence between an end of the first electrode assembly 221 and an end of the second electrode assembly 222, the two ends being close to each other.

The first insulation film 234 wraps around the first electrode assembly 221, thereby separating the first electrode assembly 221 from at least a part of the housing 211, and in turn, reducing the risk that the housing 211 electrically connects the positive electrode plate and the negative electrode plate of the first electrode assembly 221. The second insulation film 235 wraps around the second electrode assembly 222, thereby separating the second electrode assembly 222 from at least a part of the housing 211, and in turn, reducing the risk that the housing 211 electrically connects the positive electrode plate and the negative electrode plate of the second electrode assembly 222. The insulator 236 is disposed between the first wrapping end 234b and the second wrapping end 235b, thereby avoiding the risk of electrical isolation failure caused by the rupture of the first insulation film 234 or the second insulation film 235, and in turn, strengthening the electrical isolation between the first electrode assembly 221 and the second electrode assembly 222.

In an embodiment of this application, the insulator 236 may be disposed in various ways, which will be described in detail below with reference to drawings.

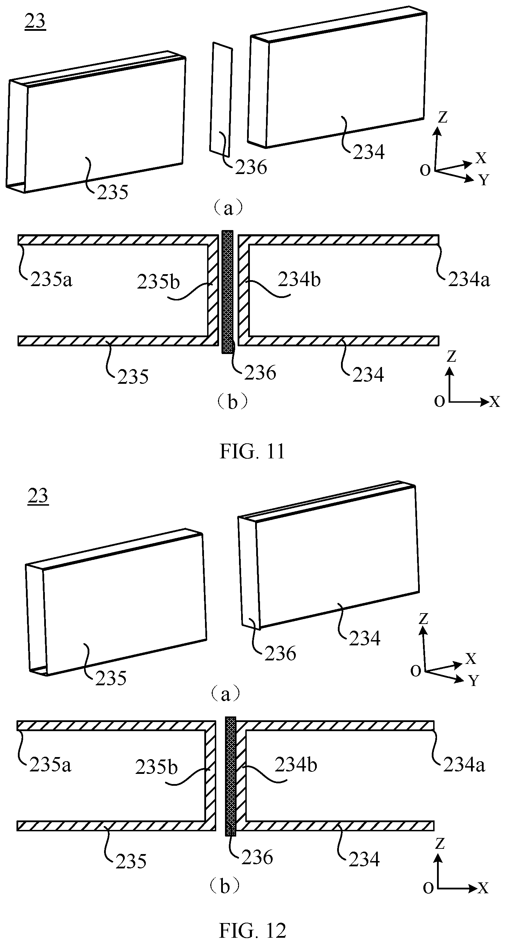

As an example, FIG. 11 is a three-dimensional schematic view and a cross-sectional view of an insulation structure 23. As shown in part (a) and part (b) of FIG. 11, in some embodiments, the insulator 236 may be independent of the first insulation film 234 and the second insulation film 235. That is, the insulator 236 may be separated from the first insulation film 234 and the second insulation film 235. In this way, in a mounting process, the first electrode assembly 221 may be wrapped in the first insulation film 234, the second electrode assembly 222 may be wrapped in the second insulation film 235, and then the insulator 236 is disposed between the first electrode assembly 221 and the second electrode assembly 22 that have been coated with the insulation film. This makes the assembling process more flexible.

As another example, FIG. 12 is a three-dimensional schematic view and a cross-sectional view of an insulation structure 23. As shown in part (a) and part (b) of FIG. 12, the insulator 236 is fixedly connected to the first wrapping end 234b of the first insulation film 234. For example, the insulator 236 may be fixedly connected to the first wrapping end 234b after being molded independently, or may be fixedly connected to the first wrapping end 234b in a process of molding the first insulation film 234, which is not limited herein. The insulator 236 fixedly connected to the first wrapping end 234b is not detachable from the first wrapping end, but the insulator 236 is detachable from the second insulation film 235.

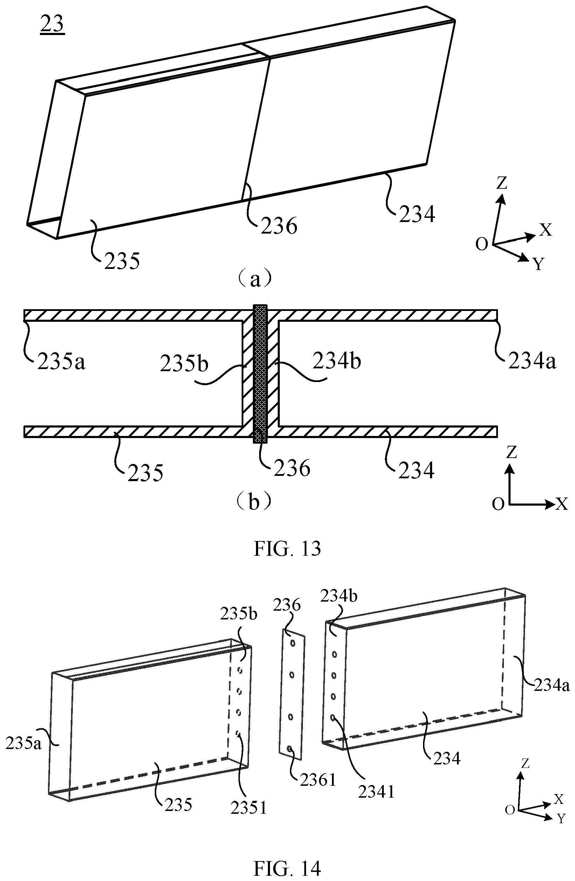

In another example, the insulator 236 may also be fixedly connected to the second wrapping end 235b of the second insulation film 235, but separated from the first insulation film 234. In this example, the specific design of the insulation structure is similar to the structure shown in FIG. 13, and is omitted here for brevity.

By being fixedly connected to the first wrapping end 234b and/or the second wrapping end 235b, the insulator 236 can alleviate the wobble of the insulator 236 when the battery cell is subjected to an external impact, reduce the risk of failure of the insulator 236, and improve safety. In addition, with the insulator 236 being fixedly connected to either the first wrapping end 234b or the second wrapping end 235b, the number of components can be reduced, and the production efficiency can be improved.

As another example, FIG. 13 is a three-dimensional schematic view and a cross-sectional view of an insulation structure 23. As shown in part (a) and part (b) of FIG. 13, the insulator 236 is fixedly connected to the first wrapping end 234b of the first insulation film 234 and the second wrapping end 235b of the second insulation film 235. For example, the insulator 236 may be fixedly connected to the first wrapping end 234b and the second wrapping end 235b after being molded independently, or may be fixedly connected to the first wrapping end 234b and the second wrapping end 235b in a process of molding the first insulation film 234 and the second insulation film 235, which is not limited herein. The insulator 236 fixedly connected to the first wrapping end 234b and the second wrapping end 235b is not detachable from the wrapping ends.

In this way, the processing process of the insulation structure 23 is simplified, and the number of components is reduced. In addition, such arrangement saves an operation of alignment between the first electrode assembly 221 and the second electrode assembly 222, thereby improving the assembling efficiency, and in turn, improving the production efficiency of the battery.

In some embodiments, as shown in FIG. 14, a through-hole 2361 running through the thickness of the insulator 236 is created in the insulator 236. The through-hole 2361 is configured to circulate an electrolyte solution in the battery cell.

In an embodiment of this application, the through-hole 2361 may extend along the first direction, or extend along a straight line that is coplanar with the first direction and that is at an acute angle to the first direction, or extend along a curve coplanar with the first direction, as long as the through-hole 2361 can serve as an electrolyte circulation channel, which is not particularly limited herein.

The through-hole 2361 created in the insulator 236 can be used as an ion channel and an electrolyte infiltration channel in the battery cell, thereby facilitating circulation of the electrolyte solution in the battery cell between the space containing the first electrode assembly and the space containing the second electrode assembly. With the through-hole 2361 created, on the one hand, the through-hole facilitates circulation of the electrolyte solution and improves consistency of infiltration of the electrolyte solution for the first electrode assembly 221 and the second electrode assembly 222, and in turn, improves the charge and discharge performance of the battery. On the other hand, the through-hole reduces the weight of the electrolyte solution, and in turn, reduces the cost of the battery cell.

Understandably, the insulators 236 shown in FIG. 11 to FIG. 13 each may include the through-hole 2361 shown in FIG. 14. To increase the circulation rate of the electrolyte solution and improve consistency of infiltration of the electrolyte solution for the first electrode assembly 221 and the second electrode assembly 222, with respect to the insulator 236 shown in FIG. 11, the through-hole 2361 may run through the insulator from one side of the insulator 236 near the first wrapping end 234b to another side of the insulator 236 near the second wrapping end 235b. With respect to the insulator 236 shown in FIG. 12, the through-hole 2361 may run through the insulator from one side of the insulator 236 near the second wrapping end 235b to another side of the insulator 236 near the first wrapping end 234b, and further run through the thickness of the first wrapping end 234b. With respect to the insulator 236 shown in FIG. 13, the through-hole 2361 may run through the insulator from one side of the insulator 236 near the second wrapping end 235b to another side of the insulator 236 near the first wrapping end 234b, and further run through the thickness of the first wrapping end 234b and the thickness of the second wrapping end 235b on both sides.

Still referring to FIG. 14, in some embodiments, a first through-hole 2341 running through the thickness of the first wrapping end 234b is created at the first wrapping end 234b. A second through-hole 2351 running through the thickness of the second wrapping end 235b is created at the second wrapping end 235b. The first through-hole 2341 and the second through-hole 2351 are configured to circulate the electrolyte solution in the battery cell.

In an example, the first through-hole 2341 is staggered from the through-hole 2361, and/or the second through-hole 2351 is staggered from the through-hole 2361. In other words, the through-hole 2361 created in the insulator 236 may be staggered from at least one of the first through-hole 2341 or the second through-hole 2351. This can avoid direct communication between the space accommodating the first electrode assembly 221 and the space accommodating the second electrode assembly 222, and in turn, prevent metal chips or other conductive matters generated in the first insulation film 234 from entering, through the through-hole 2361, the space accommodating the second electrode assembly 222, and prevent metal chips or other conductive matters generated in the second insulation film 235 from entering, through the through-hole 2361, the space accommodating the first electrode assembly 221. This avoids electrical connection between the first electrode assembly 221 and the second electrode assembly 222 caused by the metal chips, and possible resultant short-circuit risks, strengthens the electrical isolation between the first electrode assembly 221 and the second electrode assembly 222, and improves safety of the battery.

Alternatively, in some other embodiments, the through-hole 2361 may communicate with the first through-hole 2341 and/or the second through-hole 2351, for example, may be aligned with the first through-hole and/or the second through-hole. Specifically, the through-hole may be designed based on practical requirements (for example, the connection relationship between the insulator 236 and the first insulation film 234 and the second insulation film 235, the size of the opening, and the ion circulation efficiency).

For example, when the through-hole design is applied to the insulation structure 23 shown in FIG. 11, the through-hole 2361 created in the insulator 236 may be staggered from at least one of the first through-hole 2341 created at the first wrapping end 234b or the second through-hole 2351 created at the second wrapping end 235b.

For another example, when the through-hole design is applied to the insulation structure 23 shown in FIG. 12, the through-hole 2361 created in the insulator 236 may be staggered from the second through-hole 2351 created at the second wrapping end 235b, but communicate with the first through-hole 2341 created at the first wrapping end 234b.

For another example, when the through-hole design is applied to the insulation structure 23 shown in FIG. 13, the through-hole 2361 created in the insulator 236 may communicate with the first through-hole 2341 created at the first wrapping end 234b and the second through-hole 2351 created at the second wrapping end 235b.

It is hereby noted that, in an embodiment of this application, the "staggered" arrangement of two through-holes may mean that a projected area of one through-hole does not overlap a projected area of the other through-hole in the first direction. Using the staggered arrangement of the through-hole 2361 and the first through-hole 2341 as an example, the staggered arrangement may mean that the projection of the through-hole 2361 in the first direction does not overlap the projection of the first through-hole 2341 in the first direction, and specifically, may mean that the projection of an end of the through-hole 2361 in the first direction does not overlap the projection of an end of the first through-hole 2341 in the first direction, where the two ends are opposite to each other. To be specific, the projection of the end of the through-hole 2361 near the first insulation film 234 in the first direction does not overlap the projection of the end of the first through-hole 2341 near the insulator 236 in the first direction. The staggered arrangement of the through-hole 2361 and the second through-hole 2351 is understood similarly, and for brevity, not described here.

In addition, in an embodiment of this application, the "communication" of two through-holes may mean that a projected area of one through-hole partially or fully overlap a projected area of the other through-hole in the first direction. Using the communication between the through-hole 2361 and the first through-hole 2341 as an example, the communication may mean that the projection of the through-hole 2361 in the first direction at least partially overlaps the projection of the first through-hole 2341 in the first direction, and specifically, may mean that the projection of an end of the through-hole 2361 in the first direction at least partially overlaps the projection of an end of the first through-hole 2341 in the first direction, where the two ends are opposite to each other. To be specific, the projection of the end of the through-hole 2361 near the first insulation film 234 in the first direction at least partially overlaps the projection of the end of the first through-hole 2341 near the insulator 236 in the first direction. The communication between the through-hole 2361 and the second through-hole 2351 is understood similarly, and for brevity, not described here.

In some embodiments, when the projected areas of two through-holes in the first direction fully overlap, or, when the projection of one through-hole in the first direction falls within the projection of the other through-hole in the first direction, the two through-holes are referred to as being aligned.

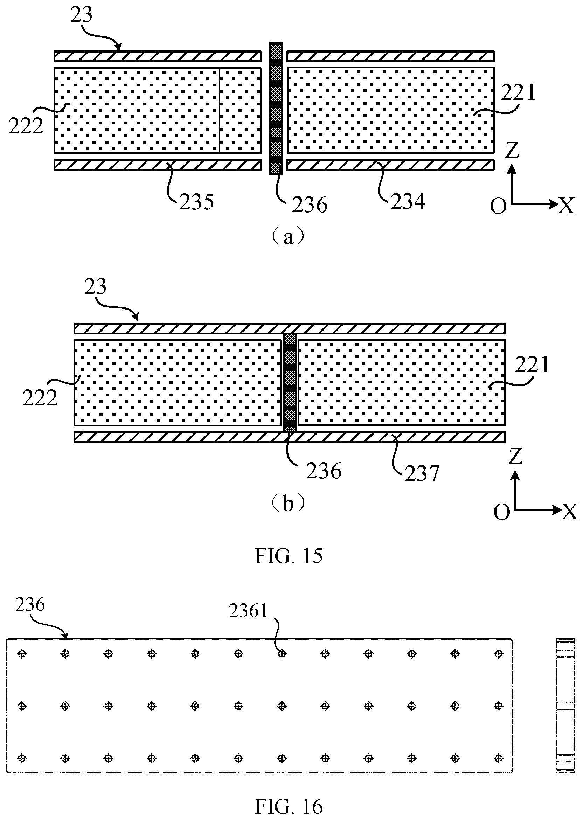

FIG. 15 is a schematic structural diagram of still another insulation structure according to an embodiment of this application.

In a possible implementation, as shown in part (a) of FIG. 15, the insulation structure 23 includes a first insulation film 234, a second insulation film 235, and an insulator 236. The first insulation film 234 is wrapped around the first electrode assembly 221, and an opening is created at each of two ends of the first insulation film 234 in the first direction. The second insulation film 235 is wrapped around the second electrode assembly 222, and an opening is created at each of two ends of the second insulation film 235 in the first direction. The insulator 236 is disposed between the first electrode assembly 221 and the second electrode assembly 222, and configured to cover an opening of the first insulation film 234 and an opening of the second insulation film 235, where the opening of the first insulation film is close to the second electrode assembly 222, and the opening of the second insulation film is close to the first electrode assembly 221.

In other words, the first insulation film 234 is wrapped around the first electrode assembly 221 along a circumferential direction perpendicular to the first direction. The second insulation film 235 is wrapped around the second electrode assembly 222 along the circumferential direction perpendicular to the first direction. The insulator 236 electrically isolates the first electrode assembly 221 from the second electrode assembly 222.

In some embodiments, as shown in FIG. 15, the insulator 236 may be a stand-alone component, and may be separated from the first insulation film 234 and the second insulation film 235.

In some other embodiments, the insulator 236 may be fixedly connected to the first insulation film 234 and/or the second insulation film 235.

In another possible implementation, as shown in part (b) of FIG. 15, the insulation structure 23 may include a third insulation film 237 and an insulator 236. The third insulation film 237 is wrapped around the first electrode assembly 221 and the second electrode assembly 222, and an opening is created at each of two ends of the third insulation film 237 in the first direction. The insulator 236 is disposed inside the third insulation film 237, and located between the first electrode assembly 221 and the second electrode assembly 222.

In other words, the third insulation film 237 assumes a cylindrical structure opened at two ends in the first direction, and the first electrode assembly 221 and the second electrode assembly 222 are disposed in the accommodation space formed by the cylindrical structure. The first electrode assembly 221 is electrically isolated from the second electrode assembly 222 by the insulator 236.

Understandably, the insulation structure 23 shown in part (b) of FIG. 15 may be transformed from the insulation structure 23 shown in part (a) of FIG. 15. Specifically, the first insulation film 234 and the second insulation film 235 in part (a) of FIG. 15 are formed in one piece, so as to form a third insulation film 237. The insulator 236 is disposed in a space formed by the third insulation film 237.

In some embodiments, in the example shown in FIG. 15, the insulator 236 may include a through-hole 2361 shown in FIG. 14 and configured to circulate the electrolyte solution.

In some embodiments, in the examples shown in FIG. 10 to FIG. 15, the first insulation film 234 and the second insulation film 235 included in the insulation structure 23 may be made of the same material, for example, a polyester insulation material such as polyimide, polyethylene, polyvinylidene difluoride, or polytetrafluoroethylene. In some embodiments, the first insulation film 234 and the second insulation film 235 may be Mylar films.

In some embodiments, the insulator 236 mentioned above may be made of a high-temperature-resistant insulation material. As an example, the insulator 236 may be made of an insulation material with a melting point greater than or equal to 200 °C. The insulator 236 made of a high-temperature-resistant insulation material is capable of withstanding high temperatures, and is generally of high strength and high hardness, and therefore, can avoid the risk of electrical isolation failure caused by the rupture of the first insulation film 234 or the second insulation film 235, and in turn, strengthen the electrical isolation between the first electrode assembly 221 and the second electrode assembly 222. In addition, the high-temperature resistance of the insulator 236 enables the insulator 236 to maintain original characteristics even at high temperatures, thereby improving the heat conduction inside the battery cell.

In some embodiments, the insulation material of the insulator 236 may include at least one of polyethylene terephthalate (polyethylene terephthalate, PET), ethylene propylene diene monomer (ethylene propylene diene monomer, EPDM), polytetrafluoroethylene (polytetrafluoroethylene, PTFE), fusible polytetrafluoroethylene (polyfluoroalkoxy, PFA) (also known as a perfluoroalkyl compound), fluororubber (fluororubber) (usually referred to as FKM), silicone rubber, alumina, silicon nitride, or ceramics.

In some embodiments, the insulator 236 may be an anodized material. Anodization, also known as surface anodization, is a metal surface treatment process, and is specifically a material protection technology of forming an oxide film on a surface of a metal material in an electrolyte solution by applying an external anodic current. The corrosion resistance, hardness, wear resistance, insulativity, heat resistance, and other properties of the metal material or product are significantly improved after surface anodization. Here, the metal material may be aluminum, magnesium alloy, zinc, zinc alloy, titanium alloy, steel, cadmium, tantalum, zirconium, or the like.

All such insulation materials are superior in heat resistance, and can maintain original characteristics even at high temperatures, thereby reducing the risk of failure of the insulator and improving safety.

Understandably, in practical applications, a person skilled in the art may select a material of the insulator 236 according to requirements (for example, requirements on cost, performance, and the like), and the material is not particularly limited herein. As an example, from a viewpoint of cost-effectiveness, the insulator 236 is preferably made of a PET material. From a viewpoint of shock absorption and deformation absorption, the insulator 236 is preferably made of fluororubber.

In the embodiment described above, the insulation structure 23 does not cover an end of the first electrode assembly 221, the end being away from the second electrode assembly 222 in the first direction, and the insulation structure 23 does not cover an end of the second electrode assembly 222, the end being away from the first electrode assembly 221 in the first direction. Such arrangement is designed to facilitate electrical connection of the positive tab and the negative tab of the first electrode assembly 221 to the electrode terminals, and electrical connection of the positive tab and the negative tab of the second electrode assembly 222 to the electrode terminals. Generally, the tabs of the electrode assembly may be electrically connected to the electrode terminals by a connection component (such as a current collecting plate). If the electrode assembly (such as the first electrode assembly 221 or the second electrode assembly 222) wobbles in the battery cell, the wobble is prone to cause fracture or damage of the connection component or failure of the weld between the connection component and the tab, and in turn, cause failure of the electrical connection between the tab and the electrode terminal. Therefore, in order to solve the wobble problem of the electrode assembly inside the battery cell, this application further provides the following embodiment, as described below with reference to drawings.

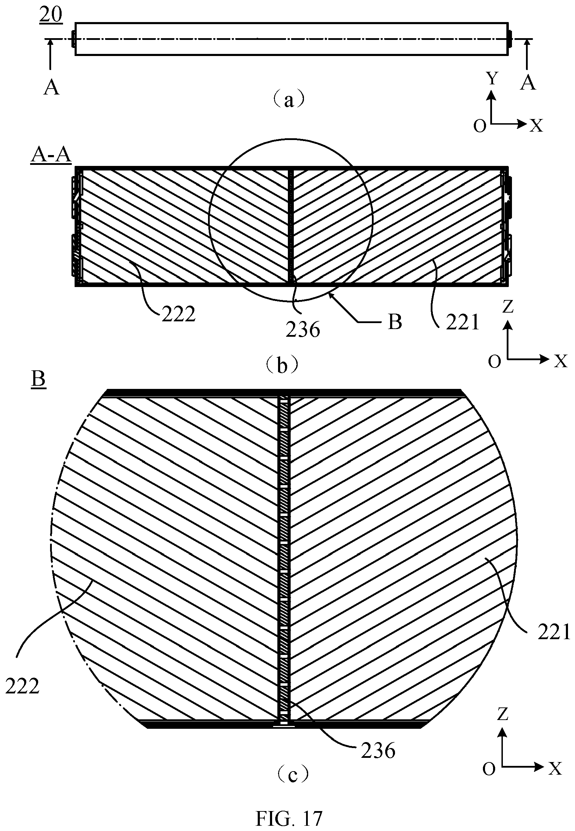

FIG. 16 is a schematic structural diagram of an insulator according to an embodiment of this application, and FIG. 17 is a schematic assembling drawing of the insulator shown in FIG. 16 and applied to a battery cell.

As shown in FIG. 16 and FIG. 17, the insulator 236 may be an elastic material. One side of the insulator 236 is configured to abut the first electrode assembly 221, and another side of the insulator 236 is configured to abut the second electrode assembly 222.

As an example rather than limitation, referring to FIG. 16, the insulator 236 may assume a sheet structure. The sheet structure is made of an elastic material.

Part (a) of FIG. 17 is a schematic top view of the battery cell 20. Part (b) of FIG. 17 is a schematic cross-sectional view of the battery cell 20 sectioned along an A-A line. Part (c) of FIG. 17 is a schematic close-up view of a part B in the cross-sectional view of the battery cell 20. Referring to FIG. 17, the insulator 236 is disposed between the first electrode assembly 221 and the second electrode assembly 222. In the assembling state, the insulator 236 abuts the first electrode assembly 221 on a side close to the first electrode assembly 221 in the first direction, and the insulator 236 abuts the second electrode assembly 222 on a side close to the second electrode assembly 222 in the first direction.

In some embodiments, in practical design, the thickness of the insulator 236 in a free state needs to be greater than a maximum reachable distance between the first electrode assembly 221 and the second electrode assembly 222 in an assembling state. In this way, during assembling, the insulator 236 is compressed and deformed, so as to abut the first electrode assembly 221 and the second electrode assembly 222. Alternatively, the thickness of the insulator 236 in a free state needs to be set to such a value that in an assembling state, the insulator 236 is in interference fit with the first electrode assembly 221 and the insulator 236 is in interference fit with the second electrode assembly 222.

Made of an elastic material, the insulator 236 is deformable in an assembling process to enable stable mounting of the first electrode assembly 221 and the second electrode assembly 222, and reduces the relative movement between the first electrode assembly 221 and the second electrode assembly 222 during use of the battery, or reduces the amplitude of movement between the first electrode assembly 221 and the second electrode assembly 222. This can reduce or avoid weld failure or connection component damage caused by a wobble of the first electrode assembly 221 and/or the second electrode assembly 222, and avoid failure of electrical connection between the tab and the electrode terminal. Further, this improves the lifespan of the battery cell, and enhances safety of the battery.

In some embodiments, the insulator 236 may include one or more through-holes 2361. When a plurality of through-holes 2361 are created, the plurality of through-holes 2361 may be arranged randomly; or arranged in an array of m rows and n columns, where m and n are both integers greater than 0; or, arranged in a circular array. The arrangement of the through-holes is not limited herein. In an embodiment of this application, the plurality of through-holes 2361 created in the insulator 236 facilitate the infiltration of the electrolyte solution and improve the ion shuttling efficiency.

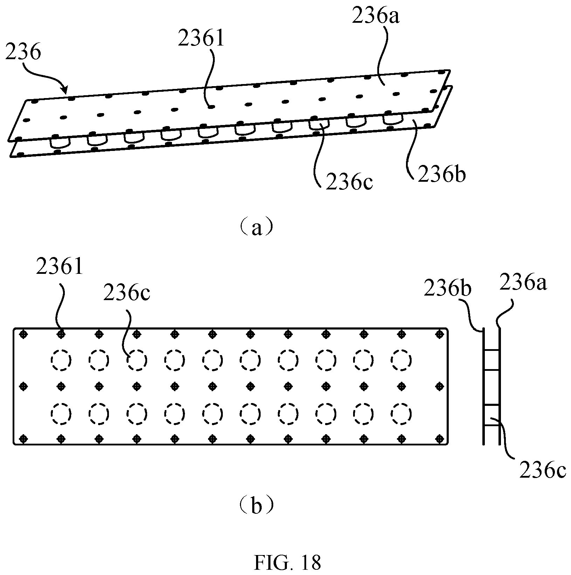

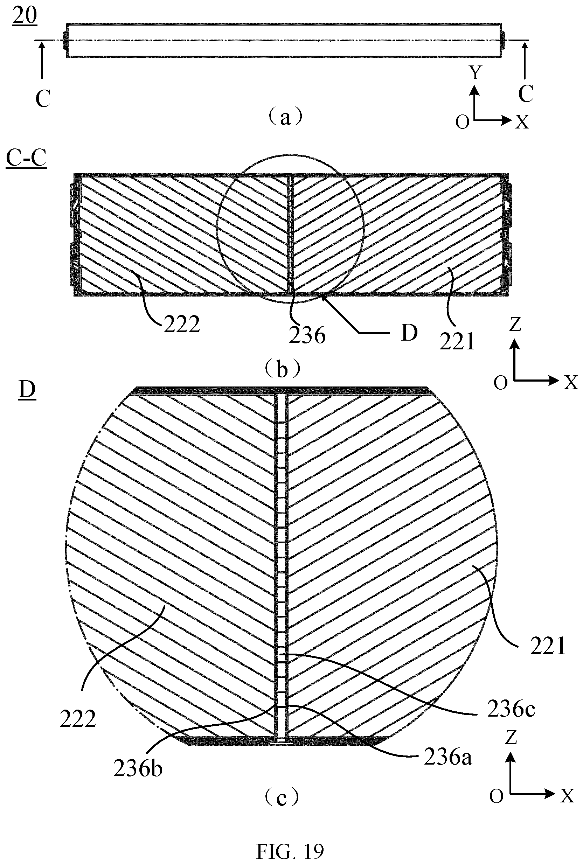

FIG. 18 is a schematic structural diagram of another insulator according to an embodiment of this application, and FIG. 19 is a schematic assembling drawing of the insulator shown in FIG. 18 and applied to a battery cell.

As shown in FIG. 18 (a) and (b) and FIG. 19, the insulator 236 may include a first insulation strip 236a and a second insulation strip 236b disposed opposite to each other along the first direction, and an elastomer 236c disposed between the first insulation strip 236a and the second insulation strip 236b. The elastomer 236c is configured to cause the first insulation strip 236a to abut the first electrode assembly 221 and cause the second insulation strip 236b to abut the second electrode assembly 222.

In an embodiment of this application, the elastomer 236c is made of an elastic material.

As an example rather than limitation, referring to FIG. 18, the elastomer 236c may be cylindrical. Alternatively, the elastomer 236c may be in other shapes such as a cube, a cuboid, a sphere, a or truncated cone. The shape of the elastomer is not limited herein.

Part (a) of FIG. 19 is a schematic top view of the battery cell 20. Part (b) of FIG. 19 is a schematic cross-sectional view of the battery cell 20 sectioned along a C-C line. Part (c) of FIG. 19 is a schematic close-up view of a part D in the cross-sectional view of the battery cell 20.

Referring to FIG. 19, the insulator 236 is disposed between the first electrode assembly 221 and the second electrode assembly 222. In an assembling state, the first insulation strip 236a is disposed opposite to the first electrode assembly 221, and the second insulation strip 236b is disposed opposite to the second electrode assembly 222. The elastomer 236c disposed between the first insulation strip 236a and the second insulation strip 236b is compressed and deformed, so as to cause the first insulation strip 236a to abut the first electrode assembly 221 and cause the second insulation strip 236b to abut the second electrode assembly 222.

In some embodiments, in practical design, the thickness of the elastomer 236c in a free state needs to be greater than a maximum reachable distance between the first insulation strip 236a and the second insulation strip 236b in an assembling state, or greater than a maximum reachable distance between the first electrode assembly 221 and the second electrode assembly 222 in an assembling state. In this way, during assembling, the elastomer 236c is compressed and deformed, so as to cause the first insulation strip 236a and the second insulation strip 236b to abut the first electrode assembly 221 and the second electrode assembly 222 respectively.

Made of an elastic material, the elastomer 236c is deformable in an assembling process to enable stable mounting of the first electrode assembly 221 and the second electrode assembly 222, and reduces the relative movement between the first electrode assembly 221 and the second electrode assembly 222 during use of the battery, or reduces the amplitude of movement between the first electrode assembly 221 and the second electrode assembly 222. This can reduce or avoid weld failure or connection component damage caused by a wobble of the first electrode assembly 221 and/or the second electrode assembly 222, and avoid failure of electrical connection between the tab and the electrode terminal. Further, this improves the lifespan of the battery cell, and enhances safety of the battery.

In some embodiments, the first insulation strip 236a and the second insulation strip 236b may be made of elastic materials. This facilitates the insulator 236 as a whole to absorb more deformation and exert a cushioning effect. In addition, the first insulation strip 236a, the second insulation strip 236b, and the elastomer 236c are all made of elastic materials, thereby simplifying the processing process of the insulator 236.

In some embodiments, the first insulation strip 236a and the second insulation strip 236b may include one or more through-holes 2361. When a plurality of through-holes 2361 are created, the plurality of through-holes 2361 may be arranged randomly; or arranged in an array of m rows and n columns, where m and n are both integers greater than 0; or, arranged in a circular array. The arrangement of the through-holes is not limited herein. In an embodiment of this application, a plurality of through-holes 2361 created in the first insulation strip 236a and the second insulation strip 236b facilitate the infiltration of the electrolyte solution and improve the ion shuttling efficiency.

In some embodiments, one or more elastomers 236c may be disposed between the first insulation strip 236a and the second insulation strip 236b. When a plurality of elastomers 236c are disposed, the stress on the insulator 236 is more uniform. In addition, an electrolyte circulation channel may be formed between adjacent elastomers 236c to facilitate infiltration of the electrolyte solution and improve the ion shuttling efficiency.

In some embodiments, the elastomer 236c is staggered from the through-holes 2361 formed in the first insulation strip 236a and the second insulation strip 236b.

In some embodiments, the elastomer 236c may be a thermoset elastomer or a thermoplastic elastomer. The thermoplastic elastomers include, but are not limited to, styrene-based thermoplastic elastomers, olefin-based thermoplastic elastomers, thermoplastic ethylene-propylene-diene monomer dynamically vulcanized elastomers, thermoplastic polyurethane elastomers, and the like.

In some embodiments, the elastic materials include, but are not limited to, rubber, plastic, synthetic rubber, modified plastic, and the like. The rubber may include fluororubber, silicone rubber, ethylene propylene diene monomer rubber, and the like.

It is hereby noted that the term "abut" referred to herein includes direct abutment and indirect abutment. Using FIG. 17 as an example, the insulator 236 may be in direct contact with, and exert a force on, the first electrode assembly 221 and the second electrode assembly 222. In other embodiments, the insulator 236 may abut the first electrode assembly 221 and the second electrode assembly 222 separately through other components such as the first insulation film 234 and the second insulation film 235. Understandably, the insulator 236 illustrated in FIG. 16 and FIG. 18 may be combined with any embodiment in FIG. 10 to FIG. 15. For example, the insulator 236 illustrated in FIG. 10 to FIG. 15 may be replaced by the structure of the insulator 236 shown in FIG. 16 or FIG. 18. For brevity, details are omitted here.

The structure of the insulation structure 23 has been described in detail above, and following describes the structure of the electrode assembly disposed in the battery cell. Understandably, a first electrode assembly 221 or a second electrode assembly 222 in an embodiment of this application may be of a jelly-roll type or a stacked type, or may be another type of electrode assembly. The type of the first electrode assembly 221 may be identical to or different from the type of the second electrode assembly 222. For ease of understanding, the following uses the first electrode assembly 221 and a first end face 2211 as an example to illustrate possible types of the electrode assembly included in the battery cell 20 in an embodiment of this application.

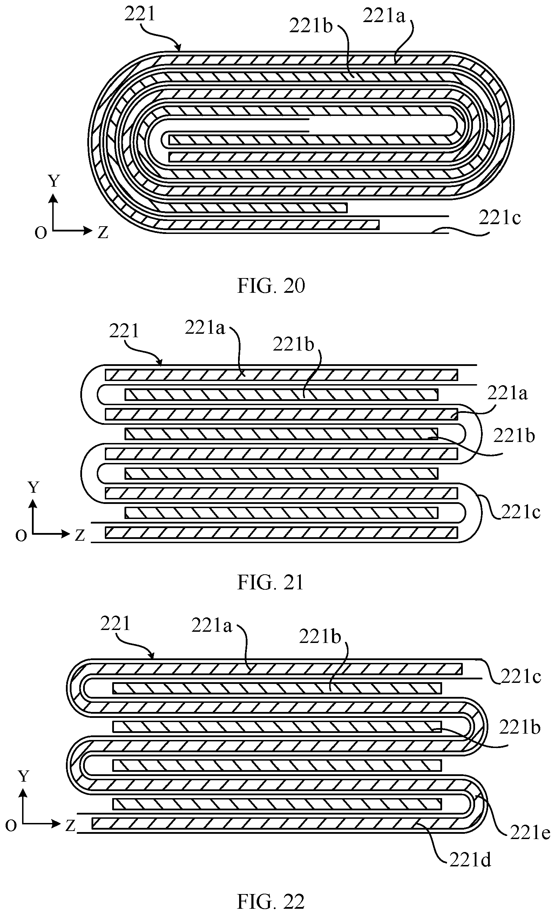

FIG. 20 is a schematic cross-sectional view of a first electrode assembly according to an embodiment of this application.

As shown in FIG. 20, the first electrode assembly 221 includes a first electrode plate 221a and a second electrode plate 221b. The first electrode plate 221a and the second electrode plate 221b are wound around a winding axis. The winding axis is parallel to the first direction X. The first end face 2211 is perpendicular to the winding axis.

The first electrode plate 221a and the second electrode plate 221b are of opposite polarities. To be specific, of the first electrode plate 221a and the second electrode plate 221b, one is a positive electrode plate, and the other is a negative electrode plate. As an example, in an embodiment of this application, the first electrode plate 221a is a negative electrode plate, and the second electrode plate 221b is a positive electrode plate.

The first electrode assembly 221 further includes a separator 221c disposed between the first electrode plate 221a and the second electrode plate 221b. The separator 221c is configured to dielectrically isolate the first electrode plate 221a from the second electrode plate 221b. In some embodiments, the first electrode plate 221a, the second electrode plate 221b, and the separator 221c are all ribbon-shaped structures. The first electrode plate 221a, the second electrode plate 221b, and the separator 221c are stacked in sequence and wound for at least two coils along the winding axis to form the first electrode assembly 221. The separator 221c may be the separator, and may be made of a material such as polypropylene or polyethylene.

In an embodiment of this application, the winding direction of the first electrode plate 221a and the second electrode plate 221b is perpendicular to the first direction X. One end of the first electrode plate 221a along the first direction X and one end of the second electrode plate 221b along the first direction X form a first end face 2211 perpendicular to the first direction X. When the electrolyte solution contacts the first end face 2211, the electrolyte solution can quickly infiltrate all electrode plate layers of the first electrode assembly 221 through the first end face 2211, implement uniform infiltration for different layers of the first electrode assembly 221, and in turn, improve the infiltration efficiency for the first electrode assembly 221.

FIG. 21 is a schematic cross-sectional view of a first electrode assembly according to another embodiment of this application.

As shown in FIG. 21, the first electrode assembly 221 assumes a stacked type structure. Specifically, the first electrode assembly 221 includes a plurality of first electrode plates 221a and a plurality of second electrode plates 221b. The plurality of first electrode plates 221a and the plurality of second electrode plates 221b are alternately stacked along a second direction (the Y direction shown in FIG. 21). The second direction Y is perpendicular to the first direction X, and the first end face 2211 is perpendicular to the first direction X.

The first electrode assembly 221 further includes a separator 221c. The separator 221c is configured to dielectrically isolate the first electrode plate 221a from an adjacent second electrode plate 221b. As an example, one separator 221c may be configured to separate one first electrode plate 221a from one second electrode plate 221b; or, one separator 221c may be configured to separate a plurality of first electrode plates 221a from a plurality of second electrode plates 221b.

In an embodiment of this application, the stacking direction of a plurality of first electrode plates 221a and a plurality of second electrode plates 221b is perpendicular to the first direction X. One end of each first electrode plate 221a among the plurality of first electrode plates 221a along the first direction X and one end of each second electrode plate 221b among the plurality of second electrode plates 221b along the first direction X form a first end face 2211 perpendicular to the first direction X. When the electrolyte solution contacts the first end face 2211, the electrolyte solution can quickly infiltrate all electrode plate layers of the first electrode assembly 221 through the first end face 2211, implement uniform infiltration for different layers of the first electrode assembly 221, and in turn, improve the infiltration efficiency for the first electrode assembly 221.

FIG. 22 is a schematic cross-sectional view of a first electrode assembly according to another embodiment of this application.

As shown in FIG. 22, the first electrode assembly 221 includes a first electrode plate 221a and a plurality of second electrode plates 221b. The first electrode plate 221a includes a plurality of stacked sections 221d and a plurality of bent sections 221e. Each bent section 221e is configured to connect two adjacent stacked sections 221d. A plurality of second electrode plates 221b and a plurality of stacked sections 221d are alternately stacked along the second direction (the Y direction shown in FIG. 22). The second direction Y is perpendicular to the first direction X, and the first end face 2211 is perpendicular to the first direction X.

In some embodiments, the first end face 2211 may be set to be perpendicular to the bent section 221e instead. That is, the first end face 2211 is perpendicular to the extension direction of each bent section 221e, so as to prevent the first end face 2211 from being an end face that includes a plurality of bent sections 221e, prevent the electrolyte solution from having to pass through the bent sections 221e to infiltrate the first electrode assembly 221, and in turn, improve the infiltration efficiency.

In an embodiment of this application, the stacking direction of the second electrode plate 221b and the stacking sections 221d is perpendicular to the first direction X. One end of the second electrode plate 221b along the first direction X and one end of each second electrode plate 221b among the plurality of second electrode plates 221b along the first direction X form a first end face 2211 perpendicular to the first direction X. When the electrolyte solution contacts the first end face 2211, the electrolyte solution can quickly infiltrate all electrode plate layers of the first electrode assembly 221 through the first end face 2211, implement uniform infiltration for different layers of the first electrode assembly 221, and in turn, improve the infiltration efficiency for the first electrode assembly 221.

It is hereby noted that the above arrangement of the first electrode assembly 221 and the first end face 2211 is also applicable to the second electrode assembly 222 and the third end face 2221. Specifically, the first electrode assembly 221 and the first electrode assembly 222 may be the same type or different types of electrode assemblies. For example, the first electrode assembly 221 and the second electrode assembly 222 may both be a jelly-roll structure, or may be the same type of stacked structure, so as to facilitate processing. Moreover, in contrast to other arrangements, in a case that the first end face 2211 and the opposite third end face 2221 are arranged in the above manner, when the electrolyte solution is circulated between the first end face 2211 and the third end face 2221, the electrolyte solution can quickly infiltrate all electrode plate layers of the first electrode assembly 221 and the second electrode assembly 222 through the first end face 2211 and the third end face 2221 respectively, implement uniform infiltration effect for the first electrode assembly 221 and the second electrode assembly 222, and in turn, improve the infiltration efficiency for the first electrode assembly 221 and the second electrode assembly 222.

An embodiment of this application further provides a battery. The battery may include the battery cell 20 according to any one of the foregoing embodiments.

An embodiment of this application further provides an electrical device. The electrical device may include the battery 10 according to any one of the foregoing embodiments, and the battery 10 is configured to provide electrical energy for the electrical device. In some embodiments, the electrical device may be a vehicle 1, watercraft, or spacecraft.

According to some embodiments of this application, referring to FIG. 10 to FIG. 19, this application provides a battery cell 20, including a first electrode assembly 221 and a second electrode assembly 222 accommodated in a housing 211. The first electrode assembly 221 and the second electrode assembly 222 are arranged along a length direction of the housing 211 and insulated from each other. An opening is created at each of two ends of the housing 211 in the length direction. The battery cell 20 further includes end caps 212 configured to cover the openings at the two ends of the housing 211 respectively. An insulator 236 is disposed between the first electrode assembly 221 and the second electrode assembly 222, and is configured to electrically isolate the first electrode assembly 221 from the second electrode assembly 222. A through-hole 2361 is created in the insulator 236 and configured to circulate an electrolyte solution to improve the consistency of infiltration for the first electrode assembly 221 and the second electrode assembly 222. At least a part of the insulator 236 is made of an elastic material, and the two sides of the insulator 236 along the first direction abut the first electrode assembly 221 and the second electrode assembly 222 respectively, thereby alleviating the wobble of the first electrode assembly 221 and the second electrode assembly 222. A first insulation film 234 may be wrapped around the first electrode assembly 221, and a second insulation film 235 may be wrapped around the second electrode assembly 222. The insulator 236 is fixedly connected to the first insulation film 234 and/or the second insulation film 235, thereby reducing the number of components and improving the production efficiency of the battery. Here, the insulator 236, the first insulation film 234, and the second insulation film 235 are collectively referred to as an insulation structure 23.

Described above are the battery cell, battery, and electrical device according to some embodiments of this application. The following describes a battery cell manufacturing method and equipment according to some embodiments of this application. For the information not detailed in the following embodiments, reference may be made to the preceding embodiments.

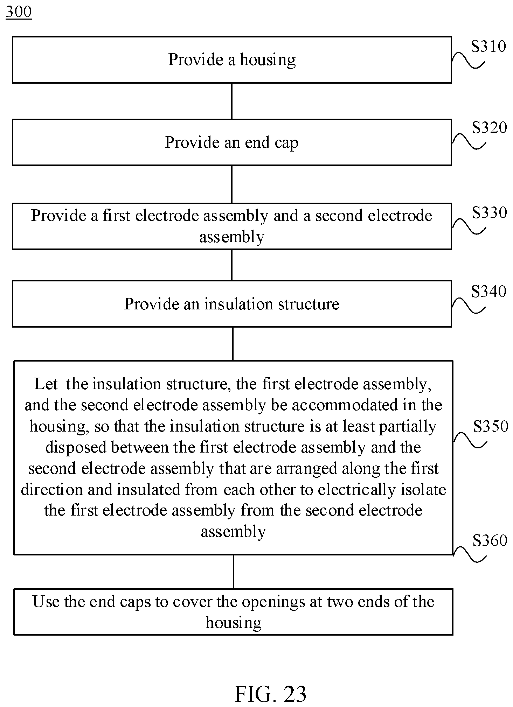

FIG. 23 is a schematic flowchart of a method 300 for manufacturing a battery cell 20 according to an embodiment of this application. As shown in FIG. 23, the manufacturing method 300 may include the following steps:
S310. Providing a housing 211, where an opening is created at each of two ends of the housing 211 in a first direction;
S320. Providing an end cap 212;
S330. Providing a first electrode assembly 221 and a second electrode assembly 222;
S340. Providing an insulation structure 23;
S350. Letting the insulation structure 23, the first electrode assembly 221, and the second electrode assembly 222 be accommodated in the housing 211, so that the insulation structure 23 is at least partially disposed between the first electrode assembly 221 and the second electrode assembly 222 that are arranged along the first direction and insulated from each other to electrically isolate the first electrode assembly 221 from the second electrode assembly 222; and
S360. Using the end caps 212 to cover the openings at two ends of the housing 211.

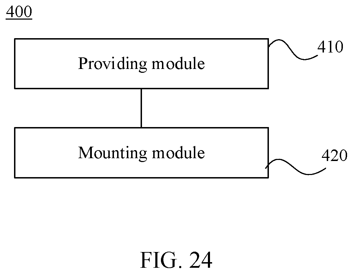

FIG. 24 is a schematic block diagram of equipment 400 for manufacturing a battery cell 20 according to an embodiment of this application. As shown in FIG. 24, the manufacturing equipment 400 may include:
a providing module 410, where the providing module 410 is configured to:
provide a housing 211, where an opening is created at each of two ends of the housing 211 in a first direction;
provide an end cap 212;
provide a first electrode assembly 221 and a second electrode assembly 222; and
provide an insulation structure 23.

The mounting module 420 is configured to:
let the insulation structure 23, the first electrode assembly 221, and the second electrode assembly 222 be accommodated in the housing 211, so that the insulation structure 23 is at least partially disposed between the first electrode assembly 221 and the second electrode assembly 222 that are arranged along the first direction and insulated from each other to electrically isolate the first electrode assembly 221 from the second electrode assembly 222; and
use the end caps 212 to cover the openings at two ends of the housing 211.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, **characterized in that** the battery cell comprises:
a housing (211), wherein an opening is created at each of two ends of the housing (211) in a first direction;
an end cap (212), configured to cover the opening at either end of the housing (211);
a first electrode assembly (221) and a second electrode assembly (222), accommodated in the housing (211), wherein the first electrode assembly (221) and the second electrode assembly (222) are arranged along the first direction and insulated from each other; and
an insulation structure (23), wherein the insulation structure is at least partially disposed between the first electrode assembly (221) and the second electrode assembly (222), and is configured to electrically isolate the first electrode assembly (221) from the second electrode assembly (222).

2. The battery cell according to claim 1, **characterized in that** the insulation structure (23) comprises:
a first part (231), disposed between the first electrode assembly (221) and the second electrode assembly (222);
a second part (232), wrapped around the first electrode assembly (221) along a circumferential direction perpendicular to the first direction; and
a third part (233), wrapped around the second electrode assembly (222) along the circumferential direction perpendicular to the first direction, wherein
at least one of the second part (232) or the third part (233) is formed together with a part or all of the first part (231) in one piece.

3. The battery cell according to claim 2, **characterized in that**, a through-hole (2311) running through a thickness of the first part (231) is created in the first part (231), and the through-hole (2311) is configured to circulate an electrolyte solution in the battery cell.

4. The battery cell according to claim 1, **characterized in that** the insulation structure (23) comprises:
a first insulation film (234), wrapped around the first electrode assembly (221), wherein an opening (234a) is created at an end of the first insulation film (234), the end being away from the second electrode assembly (222) in the first direction; and the first insulation film (234) comprises a first wrapping end (234b) disposed opposite to the opening (234a);
a second insulation film (235), wrapped around the second electrode assembly (222), wherein an opening (235a) is created at an end of the second insulation film (235), the end being away from the first electrode assembly (221) in the first direction; and the second insulation film (235) comprises a second wrapping end (235b) disposed opposite to the opening (235a); and
an insulator (236), disposed between the first wrapping end (234b) and the second wrapping end (235b).

5. The battery cell according to claim 4, **characterized in that** the insulator (236) is fixedly connected to the first wrapping end (234b) and/or the second wrapping end (235b).

6. The battery cell according to claim 4 or 5, **characterized in that**, a through-hole (2361) running through a thickness of the insulator (236) is created in the insulator (236), and the through-hole (2361) is configured to circulate an electrolyte solution in the battery cell.

7. The battery cell according to claim 6, **characterized in that**
a first through-hole (2341) running through a thickness of the first wrapping end (234b) is created at the first wrapping end (234b);
a second through-hole (2351) running through a thickness of the second wrapping end (235b) is created at the second wrapping end (235b);
the first through-hole (2341) and the second through-hole (2351) are configured to circulate the electrolyte solution in the battery cell; and
the first through-hole (2341) is staggered from the through-hole (2361), and/or the second through-hole (2351) is staggered from the through-hole (2361).

8. The battery cell according to claim 1, **characterized in that** the insulation structure (23) comprises:
a first insulation film (234), wrapped around the first electrode assembly (221), wherein an opening is created at each of two ends of the first insulation film (234) in the first direction;
a second insulation film (235), wrapped around the second electrode assembly (222), wherein an opening is created at each of two ends of the second insulation film (235) in the first direction; and
an insulator (236), disposed between the first electrode assembly (221) and the second electrode assembly (222), and configured to cover an opening of the first insulation film (234) and an opening of the second insulation film (235), wherein the opening of the first insulation film is close to the second electrode assembly (222), and the opening of the second insulation film is close to the first electrode assembly (221).

9. The battery cell according to any one of claims 4 to 8, **characterized in that** the insulator (236) is made of an insulation material with a melting point greater than or equal to 200 °C.

10. The battery cell according to claim 9, **characterized in that** the insulation material comprises at least one of
polyethylene terephthalate, ethylene propylene diene monomer rubber, polytetrafluoroethylene, fusible polytetrafluoroethylene, fluororubber, silicone rubber, aluminum oxide, silicon nitride, or ceramics.

11. The battery cell according to any one of claims 4 to 10, **characterized in that** the insulator (236) is made of an elastic material, one side of the insulator (236) is configured to abut the first electrode assembly (221), and another side of the insulator (236) is configured to abut the second electrode assembly (222).

12. The battery cell according to any one of claims 4 to 10, **characterized in that** the insulator (236) comprises:
a first insulation strip (236a) and a second insulation strip (236b) disposed opposite to each other along the first direction; and
an elastomer (236c), disposed between the first insulation strip (236a) and the second insulation strip (236b), wherein the elastomer (236c) is configured to cause the first insulation strip (236a) to abut the first electrode assembly (221) and cause the second insulation strip (236b) to abut the second electrode assembly (222).

13. The battery cell according to claim 12, **characterized in that** the first insulation strip (236a) and the second insulation strip (236b) are made of elastic materials.

14. The battery cell according to any one of claims 1 to 13, **characterized in that** a first end face (2211) of the first electrode assembly (221) is oriented toward the second electrode assembly (222), wherein
the first electrode assembly (221) comprises a first electrode plate (221a) and a second electrode plate (221b), the first electrode plate (221a) and the second electrode plate (221b) are wound around a winding axis, the winding axis is parallel to the first direction, and the first end face (2211) is perpendicular to the winding axis; or
the first electrode assembly (221) comprises a plurality of first electrode plates (221a) and a plurality of second electrode plates (221b), the plurality of first electrode plates (221a) and the plurality of second electrode plates (221b) are stacked alternately along a second direction, the second direction is perpendicular to the first direction, and the first end face (2211) is perpendicular to the first direction; or
the first electrode assembly (221) comprises a first electrode plate (221a) and a plurality of second electrode plates (221b), the first electrode plate (221a) comprises a plurality of stacked sections (221d) and a plurality of bent sections (221e), each bent section (221e) is configured to connect two adjacent stacked sections (221d), the plurality of second electrode plates (221b) and the plurality of stacked sections (221d) are stacked alternately along a second direction, the second direction is perpendicular to the first direction, and the first end face (2211) is perpendicular to the first direction.

15. The battery cell according to any one of claims 1 to 14, **characterized in that** the first direction is a length direction of the housing (211).

16. A battery, **characterized in that** the battery comprises the battery cell according to any one of claims 1 to 15.

17. An electrical device, **characterized in that** the electrical device comprises the battery according to claim 16, and the battery is configured to provide electrical energy for the electrical device.

18. A battery cell manufacturing method, **characterized in that** the method comprises:
providing a housing (211), wherein an opening is created at each of two ends of the housing (211) in a first direction;
providing an end cap (212);
providing a first electrode assembly (221) and a second electrode assembly (222);
providing an insulation structure (23);
letting the insulation structure (23), the first electrode assembly (221), and the second electrode assembly (222) be accommodated in the housing (211), so that the insulation structure (23) is at least partially disposed between the first electrode assembly (221) and the second electrode assembly (222) that are arranged along the first direction and insulated from each other to electrically isolate the first electrode assembly (221) from the second electrode assembly (222); and
using the end caps (212) to cover the openings at two ends of the housing (211).

19. A piece of battery cell manufacturing equipment, **characterized in that** the equipment comprises:
a providing module, configured to:
provide a housing (211), wherein an opening is created at each of two ends of the housing (211) in a first direction;
provide an end cap (212);
provide a first electrode assembly (221) and a second electrode assembly (222); and
provide an insulation structure (23); and
a mounting module, configured to:
let the insulation structure (23), the first electrode assembly (221), and the second electrode assembly (222) be accommodated in the housing (211), so that the insulation structure (23) is at least partially disposed between the first electrode assembly (221) and the second electrode assembly (222) that are arranged along the first direction and insulated from each other to electrically isolate the first electrode assembly (221) from the second electrode assembly (222); and
use the end caps (212) to cover the openings at two ends of the housing (211).
